(19) Europäisches Patentamt / European Patent Office / Office européen des brevets

(11) **EP 4 204 799 B1**

(12) **FASCICULE DE BREVET EUROPEEN**

(45) Date de publication et mention
de la délivrance du brevet:
**17.07.2024 Bulletin 2024/29**

(21) Numéro de dépôt: **21769445.4**

(22) Date de dépôt: **31.08.2021**

(51) Classification Internationale des Brevets (IPC):
**G01N 29/34** *(2006.01)*    **G01N 29/44** *(2006.01)*
**G01N 29/50** *(2006.01)*

(52) Classification Coopérative des Brevets (CPC):
**G01N 29/348; G01N 29/4463; G01N 29/449;**
**G01N 29/50;** G01N 2291/02466

(86) Numéro de dépôt international:
**PCT/EP2021/074028**

(87) Numéro de publication internationale:
**WO 2022/043584 (03.03.2022 Gazette 2022/09)**

(54) **PROCEDE ET SYSTEME POUR L'IMAGERIE D'UNE CIBLE A PARTIR D'ONDES COHERENTES**

METHODE UND SYSTEM ZUR BILDGEBUNG EINES TARGETS MITTELS KOHÄRENTER WELLEN

METHOD AND SYSTEM FOR IMAGING A TARGET BY MEANS OF COHERENT WAVES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.08.2020 FR 2008821**

(43) Date de publication de la demande:
**05.07.2023 Bulletin 2023/27**

(73) Titulaire: **Valpirec**
**83300 Draguignan (FR)**

(72) Inventeur: **MAURICE, François**
**83300 DRAGUIGNAN (FR)**

(74) Mandataire: **Be IP**
**Cabinet LTL SAS**
**Centre d'Entreprise et d'Innovation**
**56, Bd Niels Bohr**
**CS 52132**
**69603 Villeurbanne Cedex (FR)**

(56) Documents cités:
**WO-A1-2010/004333    US-A1- 2008 110 261**

## Description

### DOMAINE DE L'INVENTION

La présente invention concerne le domaine technique général de l'imagerie par émission d'ondes dont on peut mesurer la phase, et notamment d'ondes sonores ou ultrasonores, ou électromagnétiques.

Plus précisément, la présente invention concerne un dispositif et un procédé pour l'imagerie d'un objet cible, ou d'un milieu diffus tel qu'un tissu biologique, humain ou animal.

Dans la suite, la présente invention sera décrite en référence à l'imagerie médicale par ultrasons, étant entendu que les enseignements décrits ici peuvent être utilisés dans d'autres types d'applications (ultrasons non médicaux, SONAR, RADAR, etc.) utilisant des ondes dont l'amplitude, la fréquence et la phase sont contrôlables (i.e. ondes cohérentes).

### ARRIERE PLAN DE L'INVENTION

*1. Système d'imagerie conventionnel et Système d'imagerie ultraaortable*

L'imagerie par ultrasons est utilisée dans de nombreuses procédures de diagnostic en raison de sa nature non invasive, de son coût relativement bas et de l'absence d'exposition du patient à des rayonnements ionisants nocifs.

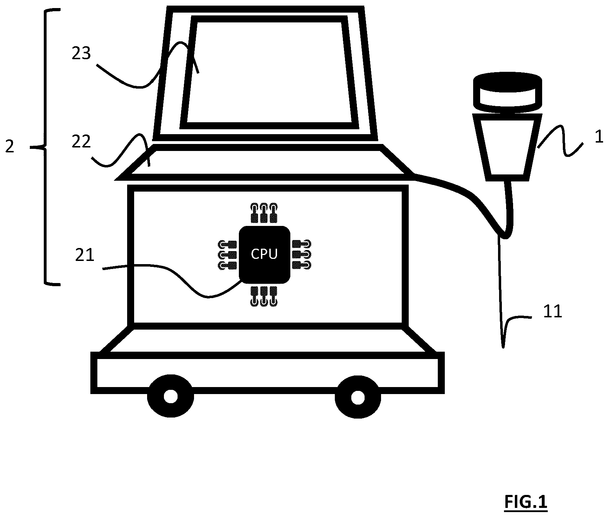

En référence à la figure 1, les systèmes d'imagerie par ultrasons classiquement utilisés comprennent :

- une sonde acoustique 1 incluant une pluralité de transducteurs, et
- une console 2 de contrôle et de traitement incluant notamment :

   ○ des moyens de traitement 21 pour le traitement des signaux acquis par la sonde,
   ○ des moyens de saisie 22 pour le paramétrage du système d'imagerie, et
   ○ des moyens d'affichage 23 pour l'affichage d'une image ultrasonore et/ou d'autres informations relatives à l'objet cible telle que l'émission d'un son ou d'un signal lumineux par exemple.

La sonde 1 est connectée à la console 2 par l'intermédiaire de moyens de communication filaire 11 - tels que des câbles électriquement conducteurs - pour l'alimentation en énergie électrique de la sonde 1 et la transmission de données entre la sonde 1 et la console 2.

La sonde 1 comporte un réseau de transducteurs piézoélectriques qui :

- en phase d'émission, reçoivent des impulsions électriques et émettent des ondes ultrasonores d'excitation (ondes focalisées ou non) qu'ils transmettent dans une (ou plusieurs) direction(s) prédéterminée(s) vers un objet cible, et selon un (ou des) angle(s) d'incidence variable(s) en fonction de déphasages ou retards des tensions appliquées aux différents transducteurs, et

- en phase de réception, reçoivent des échos acoustiques dus à la réflexion de chaque onde ultrasonore incidente à l'interface entre des régions d'impédances acoustiques différentes (qui peuvent être des régions de densité différentes à l'interface de l'objet cible).

Les échos acoustiques reçus par les transducteurs sont ensuite convertis en signaux électriques et traités pour calculer la valeur de l'écho de chaque point de l'image et sa position (par exemple en mesurant le temps écoulé entre la transmission de l'onde ultrasonore et la réception de l'écho acoustique).

De tels systèmes d'imagerie conventionnels présentent l'avantage de disposer d'une puissance de calcul importante, et de ne pas être limités dans la quantité de données pouvant être transmise entre la sonde 1 et la console 2, celles-ci étant raccordées par des moyens de communication filaire 11.

Toutefois un inconvénient majeur de ces systèmes d'imagerie conventionnels concerne leur encombrement et en particulier la gestion de l'encombrement de la connexion filaire entre la sonde et la console. Un autre inconvénient concerne les difficultés de mise à jour de tels systèmes, leurs capacités matérielles (mémoire, puissance de calcul, etc.) étant figées au moment de leur fabrication.

Depuis une quinzaine d'années, des systèmes d'imagerie ultrasonore ultraportables ont fait leur apparition. De tels systèmes d'imagerie ultraportables - dont la taille est sensiblement équivalente à celle d'un smartphone - peuvent être très aisément transportés. Un système d'imagerie ultraportable (ou « *sonde ultraportable* ») comprend notamment un réseau de transducteurs pour l'acquisition de signaux ultrasonores, des moyens de communication, une mémoire et un calculateur.

Les systèmes d'imagerie ultraportable connus de l'état de la technique ont une architecture qui prévoit une formation d'image à l'intérieure de la sonde ultraportable.

Ceci présente de nombreux inconvénients. En effet, l'exécution des traitements de formation d'image dans la sonde ultraportable induit un échauffement de celle-ci, cet échauffement pouvant provoquer un ralentissement de la cadence de formation des images échographiques, ce qui n'est pas souhaitable. Par ailleurs dans certains cas, la mise en oeuvre d'une technique d'imagerie peut nécessiter des ressources de traitement qui excèdent la capacité du calculateur de la sonde ultraportable.

Pour remédier à ces inconvénients, l'invention propose de développer un système d'imagerie ultraportable dans lequel l'image échographique est élaborée par une unité de calcul non contenue dans la sonde.

Il est alors nécessaire de transmettre les données acquises (et/ou prétraitées) par la sonde vers l'unité de calcul distante afin d'élaborer les images échographiques.

Que cette transmission de données soit mise en oeuvre en utilisant des moyens de communication filaire ou non, les débits de transfert de données accessibles sont typiquement 100 fois inférieurs à ceux des systèmes d'imagerie conventionnels. Il est donc préférable de réduire au maximum la quantité de données transmise entre la sonde ultraportable et l'unité de calcul distante, tout en permettant l'obtention d'images échographiques ayant une qualité équivalente (voire supérieure) à la qualité d'une image échographique obtenue à partir d'un système d'imagerie par ultrasons conventionnel. La qualité d'une image échographique d'un objet cible dépend en plus de la résolution spatiale, de deux paramètres :

- le Rapport Signal à Bruit, et
- la résolution de contraste.

*2. Solutions connues pour améliorer la qualité d'une image échographique*

*2.1. Imagerie focalisée*

Pour améliorer la qualité d'une image échographique d'un objet cible, on connaît une première technique consistant à focaliser les ondes ultrasonores émises par les transducteurs 12 en un point d'intérêt 3.

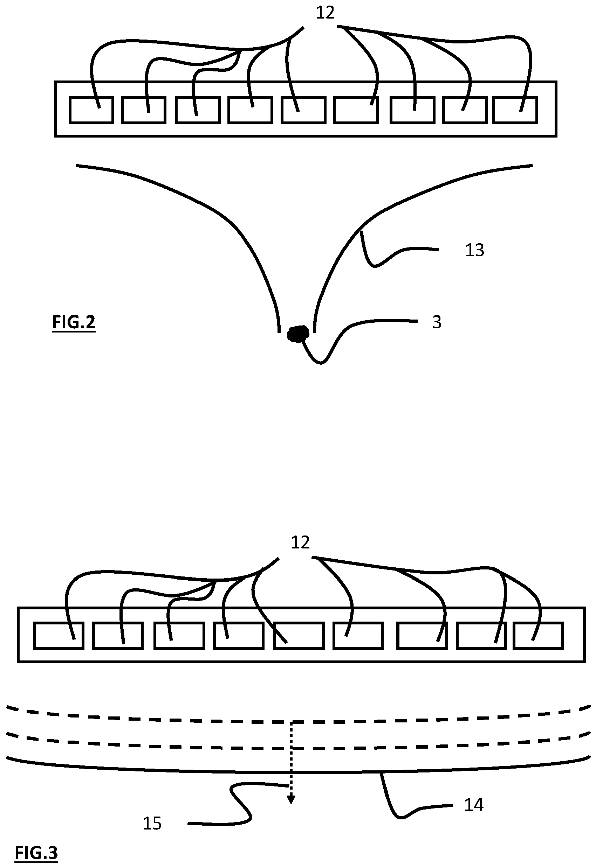

Plus précisément et en référence à la figure 2, en sélectionnant le retard (ou phase) et l'amplitude des tensions d'excitation appliquées aux transducteurs 12, ceux-ci peuvent être contrôlés pour produire des ondes ultrasonores se combinant pour former une onde ultrasonore résultante 13 qui se focalise en un point d'intérêt 3 avec une bonne résolution spatiale.

Chaque tir (i.e. émission/réception par l'ensemble des transducteurs) permet donc d'obtenir une information concernant un point focal d'intérêt 3, et il est nécessaire de répéter cette opération en différents points d'intérêt pour obtenir une image échographique complète de l'objet cible. A titre indicatif, une image échographique complète produite sur la base de tirs focalisés peut nécessiter de 64 à 256 tirs (voire plus). Pour chaque tir, la fonction d'étalement du point d'aller-retour est le produit de celle d'émission par celle de réception, ce qui permet d'améliorer le contraste. En effet, l'émission et la réception étant toutes deux concentrées sur une zone étroite, une zone hypoéchogène a moins de chance de recevoir des signaux parasites des zones échogènes voisines (désordre ou « *clutter* » selon la terminologie anglo-saxonne), ce qui contribue à maintenir le contraste près de sa valeur réelle.

Le Rapport Signal sur Bruit est important dans la zone de focalisation (concentration de l'énergie ultrasonore le long d'une ligne), et peut être encore optimisé en augmentant la tension d'excitation d'une part (dans la limite autorisée par les réglementations de sécurité ou par le matériel), et en accumulant des tirs ayant les mêmes paramètres d'autre part (s'il n'y a pas de limite thermique). Le signal cumulé augmente avec le nombre de tirs similaires, et le bruit - supposé aléatoire - augmente avec la racine carrée du nombre de tirs. L'intensité du Rapport Signal sur Bruit augmente donc également comme racine carrée du nombre de tirs.

Un inconvénient de cette technique concerne le grand nombre de tirs nécessaires pour former une image échographique complète de l'objet cible (typiquement 64 à 256 tirs sont nécessaires pour former une image complète de l'objet cible).

Cette technique n'est donc pas adaptée dans le cas d'un système d'imagerie ultraportable à moyen de calcul déporté, puisque la quantité de données devant être transmise entre la sonde d'acquisition et l'unité de calcul distante serait trop importante.

*2.2. Imagerie Synthétique*

Une autre technique d'imagerie connue permettant de réduire potentiellement le nombre d'émissions-réceptions, concerne l'imagerie synthétique qui consiste à émettre une (des) onde(s) ultrasonore(s) plane(s) (ou sphérique(s), ou divergente(s) ou spécifiées par des codes spatio-temporels, ou dont le point focal est profond pour permettre un faisceau moins finement focalisé) vers l'objet cible. Pour que la résolution axiale de la sonde soit maximale, le signal d'excitation appliqué à chaque transducteur est généralement un signal de courte durée et à large bande.

Contrairement à l'imagerie focalisée, l'imagerie synthétique permet d'obtenir une image échographique complète dès le premier tir lorsque ce tir est une excitation illuminant tout le milieu.

Pour améliorer la qualité de l'image échographique d'un objet cible, il a déjà été proposé d'émettre plusieurs ondes ultrasonores planes (ou sphériques, ou divergentes) vers l'objet cible selon différents angles.

Plus précisément et en référence à la figure 3, en fonction de la phase et de l'amplitude des tensions d'excitation appliquées aux transducteurs 12, il est possible de contrôler les transducteurs 12 pour qu'ils produisent des ondes ultrasonores se combinant pour former une onde ultrasonore résultante 14 plane qui se propage à travers le tissu à imager selon une direction 15 souhaitée. Cette onde ultrasonore résultante 14 plane est émise selon différents angles (i.e. différentes directions) pour améliorer la résolution latérale (par synthèse en transmission), le contraste et le Rapport Signal sur Bruit.

En effet, comme l'onde ultrasonore résultante 14 n'est pas focalisée, la fonction d'étalement du point d'aller-retour (PSF ou « *Point Spread Function* » en anglais) souffre de ce manque de focalisation en transmission, et le contraste de chaque image obtenue à partir d'un tir est plus faible qu'avec la technique d'imagerie focalisée conventionnelle décrite au point 2. De même, les valeurs d'intensité du signal reçu sont également inférieures du fait de l'absence de focalisation, de sorte que le Rapport Signal sur Bruit est également plus faible qu'avec la technique d'imagerie focalisée conventionnelle décrite au point 2.

Pour améliorer à la fois le Rapport Signal sur Bruit et le contraste, il est connu d'ajouter de manière cohérente des images élémentaires reconstruites par formation de faisceau (ou « beamforming » selon la terminologie anglo-saxonne), chaque image élémentaire étant obtenue à partir d'une onde résultante 14 orientée respective, c'est-à-dire émise selon une direction respective (i.e. un angle respectif). En d'autres termes, à chaque tir (i.e. émission/réception par l'ensemble des transducteurs 12) orienté, une image élémentaire est reconstruite par formation de faisceau. L'addition de ces différentes images élémentaires permet d'obtenir une image échographique finale de l'objet cible. Avec cette technique d'imagerie synthétique, le signal est sensiblement proportionnel au nombre d'images élémentaires (ou au nombre d'angles) tandis que le bruit est proportionnel à la racine carrée du nombre d'images élémentaires (ou nombre d'angles) : le Rapport Signal sur Bruit et le contraste augmentent donc également comme racine carrée du nombre d'images élémentaires (ou nombre d'angles).

La technique d'imagerie synthétique permet d'obtenir un Rapport Signal sur Bruit et un contraste sensiblement équivalents à (voire meilleurs globalement sur l'ensemble de l'image, qu'avec) la technique d'imagerie focalisée, mais en limitant le nombre de tirs nécessaires pour former une image échographique finale de l'objet d'intérêt (typiquement 10 à 40 tirs sont nécessaires en imagerie synthétique, tandis que 64 à 256 tirs sont nécessaires en imagerie focalisée).

Toutefois, un inconvénient important de la technique d'imagerie synthétique par rapport à la technique d'imagerie focalisée est que l'opération de reconstruction des images élémentaires par formation de faisceau (et le nombre de calculs associés) est également multipliée par le nombre tirs (10-40).

La technique d'imagerie synthétique décrite ci-dessus à partir d'un réseau de transducteurs 12 excités chacun par un signal impulsionnel large bande n'est donc pas adaptée non plus aux systèmes d'imagerie ultraportables pour lesquels la puissance de calcul est limitée.

### 3. Imagerie échographique en bandes étroites

Pour améliorer la qualité d'une image échographique d'un objet cible, il a déjà été proposé, en imagerie focalisée, d'utiliser plusieurs signaux d'excitation en bande étroite plutôt qu'un signal impulsionnel large bande.

Le document US 5 891 038 propose notamment un procédé de traitement de signaux ultrasonores permettant d'améliorer la sensibilité d'un système d'imagerie à ultrasons incluant une pluralité de transducteurs.

Le procédé comprend :

- l'émission d'une première onde ultrasonore focalisée ayant une première bande de fréquences centrée sur une première fréquence en excitant des transducteurs émetteurs du système d'imagerie pendant un premier intervalle de temps,

- l'émission d'une deuxième onde ultrasonore focalisée ayant une deuxième bande de fréquences centrée sur une deuxième fréquence différente de la première fréquence en excitant des transducteurs émetteurs du système d'imagerie pendant un deuxième intervalle de temps,

- la formation d'une première paire de signaux complexes à partir de premiers signaux échos reçus par des transducteurs récepteurs du système d'imagerie, les premiers signaux échos reçus étant représentatifs d'une portion de première onde ultrasonore rétrodiffusée vers les transducteurs récepteurs,

- la formation d'une deuxième paire de signaux complexes à partir de deuxièmes signaux échos reçus par les transducteurs récepteurs du système d'imagerie, les deuxième signaux reçus étant représentatifs d'une portion de deuxième onde ultrasonore rétrodiffusée vers les transducteurs récepteurs,

- le filtrage des première et deuxième paires de signaux complexes, et

- la sommation des première et deuxième paires de signaux complexes filtrés pour former un signal complexe résultant ayant des composantes représentant la somme des composantes respectives des première et deuxième paires de signaux complexes.

Cette technique consistant à émettre successivement, avec le(s) même(s) transducteur(s), des signaux à bande étroite, et à en sommer de façon cohérente les réponses échos permet d'obtenir un signal résultant :

- de plus large bande que chaque composante émise, mais de bande globale se situant bien entendu à l'intérieur de celle du transducteur,

- de Rapport Signal sur Bruit meilleur que celui obtenu en utilisant directement un signal d'excitation large bande de même amplitude.

Toutefois, même si cette technique permet d'améliorer le Rapport Signal sur Bruit et la résolution axiale du dispositif d'imagerie ultrasonore, celle-ci n'est pas optimale dans le cadre d'un système d'imagerie ultraportable à moyens de calcul déportés, la quantité de données devant être transmise entre la sonde d'acquisition et l'unité de calcul distante n'étant pas suffisamment réduite.

Le document WO 2010/004333 décrit un procédé consistant à générer une image ultrasonore d'un objet cible, le procédé comprenant les étapes consistant à :

- émettre une première impulsion ultrasonore et au moins une impulsion ultrasonore supplémentaire consécutive, le long d'une ligne de balayage prédéterminée, chaque impulsion ultrasonore émise présentant un spectre énergétique comportant au moins une crête, chaque crête présentant une fréquence centrale prédéterminée, la fréquence centrale prédéterminée d'au moins une crête de ladite impulsion ultrasonore émise étant différente de la fréquence centrale prédéterminée d'au moins une crête d'au moins une autre impulsion ultrasonore émise;
- générer au moins deux signaux d'écho ultrasonore respectifs dérivés des réflexions respectives de ladite première impulsion et d'au moins ladite impulsion ultrasonore émise supplémentaire à partir d'un objet cible ; et
- ajouter au moins deux desdits signaux d'écho ultrasonore pour générer un signal d'écho résultant présentant un spectre énergétique de signal d'écho résultant.

Le document US 2008/110261 décrit un procédé comprenant :

- la transmission d'une onde ultrasonore non formée en faisceau ou formée en faisceau dans le support,
- la réception de plus d'une onde ultrasonore en écho à partir du support, et
- la conversion de l'onde ultrasonore en écho reçue en des données numériques.

### 4. *But de l'invention*

Un but de la présente invention est de proposer un procédé et un système d'imagerie par ultrasons permettant de remédier à au moins l'un des inconvénients précités.

Plus précisément, un but de la présente invention est de proposer un procédé et un système permettant de limiter la quantité de données transmise par une sonde d'acquisition vers un dispositif de traitement distant, tout en conservant une bonne qualité d'image en termes de signal à bruit et de pénétration ainsi qu'en terme de contraste.

### BREVE DESCRIPTION DE L'INVENTION

A cet effet, l'invention propose un procédé de traitement de signaux acoustiques ou électromagnétiques (signaux lumineux, signaux micro-ondes, etc.) enregistrés par un récepteur, lesdits signaux acoustiques ou électromagnétiques étant représentatifs d'ondes acoustiques ou électromagnétiques réfléchies par un milieu à étudier après réflexion sur ledit milieu, d'ondes acoustiques ou électromagnétiques émises par un émetteur pour illuminer le milieu à étudier, remarquable en ce que le procédé comprend les étapes suivantes :

- l'émission successive par l'émetteur, de première et deuxième ondes en réponse à l'application successive sur l'émetteur, de premier et deuxième signaux électriques d'excitation dans des première et deuxième bandes de fréquences distinctes contenues dans une plage de fréquences d'excitation de l'émetteur, la bande de fréquence de chacun des premier et deuxième signaux électriques d'excitation, telle que mesurée sur la base d'une largeur de bande à -6dB, étant inférieure au quart de la plage de fréquences de l'émetteur,
- la réception par le récepteur, de premier et deuxième échos acoustiques ou électromagnétiques respectifs dus aux réflexions respectives des première et deuxième ondes à l'interface d'un objet cible contenu dans le milieu à étudier, et la conversion des premier et deuxième échos acoustiques ou électromagnétiques en premier et deuxième signaux électriques de réception respectifs,
- le prétraitement des premier et deuxième signaux électriques de réception pour obtenir des signaux prétraités, le prétraitement consistant en :

  ○ une numérisation des premier et deuxième signaux électriques de réception pour obtenir des premier et deuxième signaux numériques,
  ○ au moins un mixage des premier et deuxième signaux numériques pour obtenir des premier et deuxième signaux mixés, la fréquence de mixage du premier signal numérique étant différente de la fréquence de mixage du deuxième signal numérique,
  ○ au moins un filtrage passe-bas des premier et deuxième signaux mixés pour obtenir des premier et deuxième signaux filtrés, la fréquence de coupure du filtrage passe-bas, telle que mesurée sur la base d'une largeur de bande à -6dB, étant inférieure au huitième de la plage de fréquences de l'émetteur,
  ○ au moins une décimation des premier et deuxième signaux filtrés pour obtenir des premier et deuxième signaux décimés caractérisés par un débit d'échantillons complexes démodulés et décimés inférieur à la moitié de la plage de fréquences de l'émetteur.

Le lecteur appréciera que dans certaines variantes de réalisation, l'émetteur et le récepteur consistent en deux entités distinctes (chaque entité pouvant inclure un ou plusieurs éléments matériels) :

- l'une des entités permettant l'émission d'ondes acoustiques (tel qu'un (ou plusieurs) camion(s)-vi-

9 EP 4 204 799 B1 10

breur(s), ou un (ou plusieurs) sonar(s)) ou électromagnétiques (tel qu'un (ou plusieurs) émetteur(s) RADAR), et

- l'autre permettant la réception d'ondes acoustiques (tel qu'un géophone ou un hydrophone) ou électromagnétiques (tel qu'un (ou plusieurs) récepteur(s) RADAR).

Dans d'autres variantes de réalisation l'émetteur et le récepteur consistent en une seule entité (tel qu'un (ou plusieurs) transducteur(s) piézoélectrique(s)) permettant à la fois l'émission et la réception d'ondes acoustiques.

On entend, dans le cadre de la présente invention, par « *bandes de fréquences distinctes »,* des bandes de fréquences non superposées en totalité, celle-ci pouvant néanmoins se chevaucher partiellement.

Des aspects préférés mais non limitatifs du procédé selon l'invention sont les suivants :

- avantageusement, pour l'étape de démodulation des premier et deuxième signaux numériques :

  ○ chaque fréquence de mixage du premier signal numérique peut être choisie égale à :

    ▪ la fréquence centrale de la première bande de fréquences, ou à
    ▪ une harmonique de la première bande de fréquence, ou à
    ▪ une sous-harmonique de la première bande de fréquence,

  ○ chaque fréquence de mixage du deuxième signal numérique peut être choisie égale à :

    ▪ la fréquence centrale de la deuxième bande de fréquences, ou à
    ▪ une harmonique de la deuxième bande de fréquence, ou à
    ▪ une sous-harmonique de la deuxième bande de fréquence ;

- les premier et deuxième signaux électriques d'excitation peuvent consister chacun en un signal électrique de type apodisé temporellement ;
- l'émetteur peut être adapté pour émettre des ondes selon des directions de propagation différentes, l'étape d'émission successive des première et deuxième ondes comportant les sous-étapes consistant à :

  ○ émettre la première onde uniquement selon une première direction, et
  ○ émettre la deuxième onde uniquement selon une deuxième direction différente de la première direction ;

Bien entendu les premiers et deuxième ondes peuvent être plane, sphérique, ou être générées à partir de lois de délai (profil des instants de déclenchement des signaux d'excitation appliqués aux transducteurs) arbitraires, en général continue. Dans le cas ci-dessus, les lois de délais sont différentes (le lecteur appréciera que dans d'autres variantes de l'invention, ces lois de délai peuvent être identiques pour les première et deuxième ondes).

- l'émetteur peut inclure un jeu de transducteurs s'étendant linéairement, l'étape d'émission des première et deuxième ondes comportant les sous-étapes consistant à :

  ○ émettre la première onde à partir d'un premier groupe de transducteurs du jeu de transducteurs,
  ○ émettre la deuxième onde à partir d'un deuxième groupe de transducteurs du jeu de transducteurs, le deuxième groupe de transducteurs étant différent du premier groupe de transducteurs ;

- le procédé peut comprendre en outre une étape de transmission par le récepteur, des signaux prétraités vers un dispositif de traitement distant ;
- avantageusement :

  ○ l'étape d'émission peut comprendre l'émission de N ondes en réponse à l'application successive de N signaux électriques d'excitation dans N bandes de fréquences distinctes contenues dans la plage de fréquences de l'émetteur, N étant un entier supérieur ou égal à 3,
  ○ l'étape de réception peut comprend la réception de N échos acoustiques ou électromagnétiques et leur conversion en N signaux électriques de réception respectifs,
  ○ l'étape de prétraitement peut comprendre :

    ▪ la numérisation des N signaux électriques de réception pour obtenir N signaux numériques,
    ▪ le mixage de chaque signal numérique pour obtenir un signal mixé, la fréquence de mixage de chaque signal numérique étant égale à la fréquence centrale, à une harmonique ou à une sous-harmonique de la bande de fréquences de son signal d'excitation associé,
    ▪ le filtrage passe-bas de chaque signal mixé pour obtenir un signal filtré,
    ▪ la décimation de chaque signal filtré pour obtenir un signal décimé,

le procédé comprenant en outre une étape de traitement pour obtenir une image du milieu à étudier, ladite étape de traitement incluant :

◦ une sous-étape de formation d'une image élémentaire à partir de chaque signal décimé, ladite étape de formation d'une image élémentaire incluant le calcul de points s'étendant sur une surface 2D ou un volume 3D en utilisant les informations contenues dans le signal décimé,
◦ une sous-étape de transmodulation consistant à rapporter chaque image élémentaire formée à une fréquence de référence commune, et
◦ une sous-étape de sommation des images élémentaires transmodulées pour obtenir une image finale du milieu à étudier.

L'invention concerne également un système de traitement de signaux acoustiques ou électromagnétiques enregistrés par un récepteur, lesdits signaux acoustiques ou électromagnétiques étant représentatifs d'ondes acoustiques ou électromagnétiques réfléchies par un milieu à étudier après réflexion sur ledit milieu d'ondes acoustiques ou électromagnétiques émises par un émetteur pour illuminer le milieu à étudier, *remarquable en ce que* le système comprend :

- un contrôleur pour commander :

◦ l'émission successive de première et deuxième ondes en réponse à l'application successive sur l'émetteur, de premier et deuxième signaux électriques d'excitation dans des première et deuxième bandes de fréquences distinctes contenues dans une plage de fréquences d'excitation de l'émetteur, la bande de fréquence de chacun des premier et deuxième signaux électriques d'excitation, telle que mesurée sur la base d'une largeur de bande à -6dB, étant inférieure au quart de la plage de fréquences de l'émetteur,
◦ la réception par le récepteur, de premier et deuxième échos acoustiques ou électromagnétiques respectifs dus aux réflexions respectives des première et deuxième ondes à l'interface d'un objet cible contenu dans le milieu à étudier, et la conversion des premier et deuxième échos acoustiques ou électromagnétiques en premier et deuxième signaux électriques de réception respectifs,

- une unité d'acquisition pour le prétraitement des premier et deuxième signaux électriques de réception afin d'obtenir des signaux prétraités, le prétraitement consistant en :

◦ la numérisation des premier et deuxième signaux électriques de réception pour obtenir des premier et deuxième signaux numériques,
◦ le mixage des premier et deuxième signaux numériques pour obtenir des premier et deuxième signaux mixés, la fréquence de mixage du premier signal numérique étant différente de la fréquence de mixage du deuxième signal numérique,
◦ le filtrage passe-bas des premier et deuxième signaux mixés pour obtenir des premier et deuxième signaux filtrés, la fréquence de coupure du filtrage passe-bas, telle que mesurée sur la base d'une largeur de bande à -6dB, étant inférieure au huitième de la plage de fréquences de l'émetteur,
◦ la décimation des premier et deuxième signaux filtrés pour obtenir des premier et deuxième signaux décimés caractérisés par un débit d'échantillons complexes démodulés et décimés inférieur à la moitié de la plage de fréquences de l'émetteur.

L'invention concerne également un produit programme d'ordinateur comprenant des instructions de code de programmation destinées à exécuter les étapes du procédé décrit ci-dessus lorsque ledit programme est exécuté sur un ordinateur.

## BREVE DESCRIPTION DES DESSINS

D'autres avantages et caractéristiques du procédé et de la sonde selon l'invention ressortiront mieux de la description qui va suivre de plusieurs variantes d'exécution, données à titre d'exemples non limitatifs, à partir des dessins annexés sur lesquels :

- la figure 1 est une représentation schématique d'un système d'imagerie par ultrasons de l'art antérieur intégrant une sonde et une console de traitement,
- la figure 2 est une représentation schématique du principe d'imagerie focalisée,
- la figure 3 est une représentation schématique du principe d'imagerie synthétique,
- la figure 4 est une représentation schématique d'un système d'imagerie par ultrasons incluant une sonde d'acquisition, une (ou plusieurs) unité(s) de calcul distante(s) et une (ou plusieurs) unité(s) d'affichage distante(s),
- la figure 5 est une représentation schématique d'étages d'émission et de réception de la sonde d'acquisition,
- la figure 6 est une représentation schématique d'une pluralité de signaux d'excitation en bandes de fréquences étroites susceptibles d'être appliqués à des transducteurs de la sonde d'acquisition,
- la figure 7 est une représentation schématique des spectres d'énergie des signaux d'excitation représentés à la figure 6,
- la figure 8 est une représentation schématique d'une étape de numérisation,
- la figure 9 est une représentation schématique d'une étape de mixage,

- la figure 10 est une représentation schématique d'une étape de filtrage,
- la figure 11 est une représentation schématique d'une étape de décimation
- la figure 12 est une représentation schématique de traitements appliqués à différentes types de signaux d'excitation,
- la figure 13 est une représentation schématique d'étapes de mixage, de filtrage et de décimation,
- la figure 14 est une représentation schématique d'images élémentaires correspondant à des faisceaux formés par formation de faisceau (ou « *beamforming* » en anglais),
- la figure 15 est une représentation schématique d'une étape de transmodulation appliquée à une image élémentaire,
- la figure 16 est une représentation schématique d'étapes de prétraitement de signaux échos acquis.

## DESCRIPTION DETAILLEE DE L'INVENTION

On va maintenant décrire plus en détails des exemples de sonde et de procédé selon l'invention en référence aux figures. Dans ces différentes figures, les éléments équivalents sont désignés par la même référence numérique.

### 1. *Système d'imagerie par ultrasons*

#### 1.1. *Généralités*

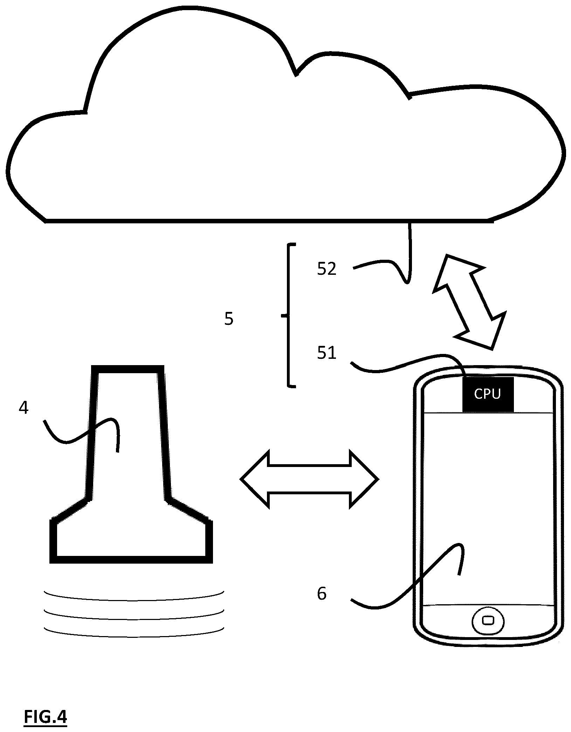

En référence à la figure 4, on a illustré un exemple de système d'imagerie par ultrasons selon l'invention. Ce système comprend :

- une sonde 4 d'acquisition de données formant un appareil d'imagerie ultraportable,
- une unité de calcul externe 5 pour le traitement des données transmises par la sonde 4,
- une unité d'affichage 6 pour l'affichage d'une image échographique d'un objet cible et/ou d'informations relatives à l'objet imagé.

Les échanges de données entre la sonde 4 et l'unité de calcul 5 externe peuvent être réalisés en utilisant des moyens de communication avec ou sans fil. Les échanges de données entre l'unité de calcul 5 externe et l'unité d'affichage 6 peuvent être réalisés en utilisant des moyens de communication avec ou sans fil.

Dans certains modes de réalisation, l'unité d'affichage 6 peut être intégrée à l'unité de calcul 5 externe. Par exemple, l'unité d'affichage 6 peut consister en l'écran d'un smartphone, et l'unité de calcul 5 externe peut consister en l'unité centrale 51 (processeur, mémoire, etc.) du Smartphone.

En variante, l'unité de calcul 5 externe peut être totalement dissociée de l'unité d'affichage 6. Par exemple, l'unité de calcul 5 externe peut consister en un (ou plusieurs) serveur(s) informatique(s) d'un réseau 52 - tel que le réseau Internet - et l'unité d'affichage 6 peut consister en l'écran d'un Smartphone. L'utilisation de l'informatique de nuage (ou « *cloud computing* » selon la terminologie anglo-saxonne) permet de disposer d'une puissance de calcul très importante, notamment pour la mise en oeuvre d'algorithmes de traitement de signaux nécessitant l'utilisation de ressources matérielles ayant une puissance de calcul supérieure à celle d'un Smartphone.

En variante encore, l'unité de calcul 5 externe peut être partiellement dissociée de l'unité d'affichage 6. Par exemple, l'unité de calcul 5 peut être composée :

- d'une part de l'unité centrale 51 (processeur, mémoire, etc.) d'un Smartphone, par exemple pour la mise en oeuvre de traitements nécessitant une faible puissance de calcul, et pour lesquels l'utilisateur souhaite disposer de résultats affichables sur l'unité d'affichage 6 en temps réel (imagerie B-Mode, etc.),
- d'autre part d'un (ou plusieurs) serveur(s) informatique(s) d'un réseau 52 pour la mise en oeuvre de traitements nécessitant une forte puissance de calcul, et pour lesquels l'utilisateur ne souhaite pas disposer de résultats affichables en temps réel (élastographie, etc.).

Ainsi, le système d'imagerie par ultrasons est composé d'une sonde à ultrasons 4 hébergeant toute l'électronique d'acquisition et envoyant les données acquises (éventuellement prétraitées) à l'unité de calcul 5 (ordinateur distant et/ou tablette et/ou smartphone, etc.) pour la reconstruction des images élémentaires par formation de faisceaux ou une autre technique de reconstruction d'image, et la génération d'une image échographique finale de l'objet cible. La reconstruction par formation de faisceaux n'étant pas mise en oeuvre dans la sonde 4, celle-ci consomme moins d'énergie que les systèmes d'imagerie ultraportables intégrant des moyens de traitement internes, et offre des performances plus élevées.

#### 1.2. *Sonde*

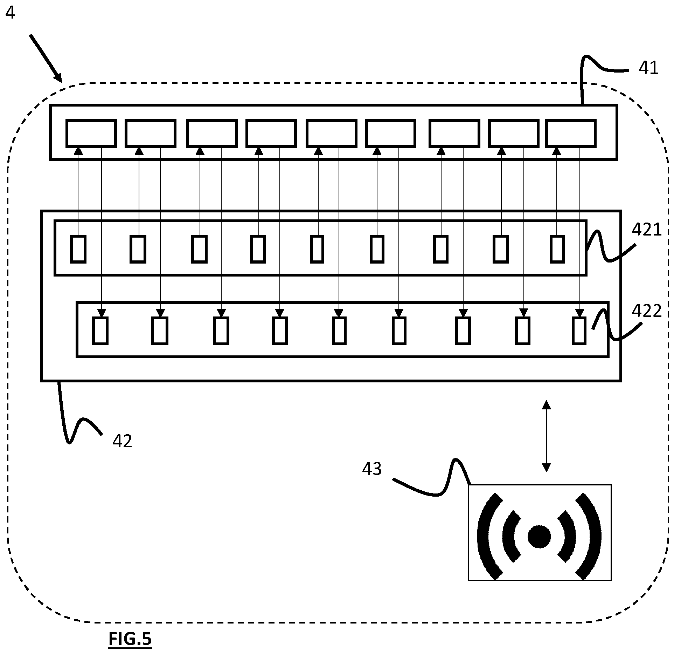

En référence à la figure 5 ; la sonde 4 comprend :

- un jeu de « *n* » transducteurs ultrasonores 41 (« *n* » étant un entier par exemple compris entre 1 et 1024 dans le cas d'une sonde linéaire ou courbe, mais pouvant également s'appliquer à une sonde matricielle à plusieurs milliers de transducteurs),
- une unité d'acquisition 42 incluant :

    ◦ un étage d'émission 421,
    ◦ un étage de réception 422,

- une unité de communication 43 (avec ou sans fil) pour :

  ○ l'éventuelle compression (selon toute méthode de compression connue de l'homme du métier) de données issues de l'étage de réception 422, et
  ○ l'émission des données (compressées ou non) vers les moyens de traitement externes.

Le jeu de transducteurs 41 permet d'émettre des ondes ultrasonores d'excitation vers un milieu à explorer (organe, tissu biologique, etc.), et de recevoir des échos acoustiques (i.e. ondes ultrasonores réfléchies par les différentes interfaces du milieu à explorer). Chaque transducteur consiste par exemple en une plaquette de matériau piézoélectrique de forme rectangulaire revêtue sur ses faces avant et arrière d'électrodes. De tels transducteurs sont connus de l'homme du métier et ne seront pas décrits plus en détails dans la suite.

Dans la variante de réalisation illustrée à la figure 5, tous les transducteurs du jeu 41 sont utilisés à la fois en émission et en réception. Dans d'autres modes de réalisation, des transducteurs distincts peuvent être utilisés pour l'émission et la réception. Par exemple, tous les transducteurs de rang impair du jeu (1, 3, 5, etc.) peuvent être utilisés exclusivement en émission, tandis que tous les transducteurs de rang pair du jeu (2, 4, 6, etc.) sont utilisés exclusivement en réception.

L'unité d'acquisition 42 est reliée au jeu de transducteurs ultrasonores 41. Elle permet de piloter les transducteurs du jeu 41, et de traiter les données acquises par les transducteurs du jeu 41. Plus précisément, l'étage d'émission 421 de l'unité d'acquisition 42 permet de commander l'émission d'ondes ultrasonores vers le milieu à explorer. L'étage de réception 422 de l'unité d'acquisition 42 permet quant à lui de recevoir les signaux acquis par les transducteurs et de les prétraiter, comme il sera décrit plus en détails dans la suite. Un circuit d'interface peut être prévu entre les étages d'émission 421 et de réception 422 pour relier sélectivement l'un ou l'autre de ces étages au jeu de transducteurs 41 et éviter notamment l'aveuglement de l'étage de réception 422 par l'étage d'émission 421.

L'étage d'émission 421 comprend un (ou plusieurs) générateur(s) de signaux d'excitation relié(s) à un (ou plusieurs) retardateur(s) qui détermine(nt) les instants de déclenchement du signal d'excitation associé à chaque transducteur, par exemple pour diriger obliquement les ondes ultrasonores par rapport au plan du jeu de transducteurs 41.

L'étage de réception 422 comprend un amplificateur recevant les signaux électriques correspondant aux échos ultrasonores reçus par les transducteurs du jeu 41.

*1.3. Problématique associée au système d'imagerie*

L'architecture choisie pour le système d'imagerie décrit au point 1 impose certaines contraintes :

- la quantité de données transmise par la sonde doit être la plus faible possible (en effet, les moyens de communication sans fil actuels présentent un débit de transmission de données très inférieur (notamment 100 fois inférieur) au débit de données praticable entre une unité d'acquisition et ses périphériques rapprochés - tels qu'une carte graphique - d'un système d'imagerie conventionnel comme illustré à la figure 1),
- le nombre de calculs réalisés par l'unité de calcul externe doit être le plus petit possible d'une part pour limiter la puissance de calcul nécessaire (et donc la consommation en énergie électrique) dans le cas d'un smartphone par exemple, et d'autre part pour réduire le temps nécessaire à l'obtention d'un résultat,
- la qualité de l'image échographique (et donc le contraste et le Rapport Signal sur Bruit) doit être la plus importante possible.

Au vu de ces différentes contraintes, la technique d'imagerie focalisée le long de chacune des lignes de l'image ne peut être mise en oeuvre, cette technique nécessitant trop de tirs pour former l'image échographique complète de l'objet cible. Une solution basée sur une amélioration de la technique d'imagerie synthétique doit donc être retenue. Cette technique peut être utilisée en envoyant des ondes non focalisées finement : (onde plane ou divergentes) mais aussi en éclairant un équivalent de faisceau large (ou « *fat beam* » en anglais) ne couvrant pas tout le champ image.

Afin de réduire la quantité de données à transférer aux moyens de traitement externes d'une part, et de limiter le nombre d'opérations nécessaires à la reconstruction des images élémentaires par formation de faisceau d'autre part, le nombre de tirs doit être limité (typiquement 5 tirs à différents angles) par rapport à la technique d'imagerie synthétique conventionnelle (pour laquelle 10 à 40 tirs sont nécessaires pour former une image échographique finale comparable en qualité à une image focalisée).

Enfin, l'influence du faible nombre de tirs sur la qualité de l'image échographique finale générée doit être limitée pour que les performances du système d'imagerie soient acceptables.

En tenant compte de ces différentes contraintes, l'inventeur a développé la solution décrite dans la suite et qui est mise en oeuvre dans les étages d'émission 421 et de réception 422 de la sonde. Cette solution est basée sur une amélioration de la technique d'imagerie en bandes étroites.

## 2. *Ultrasons Synthétiques à partir de sous-bandes étroites*

L'objectif de la solution décrite dans la suite est de permettre l'obtention d'une image échographique finale à partir d'images échographiques élémentaires acquises à différents angles :

- en limitant la quantité de données à transférer de la sonde 4 vers l'unité de calcul 5,
- ainsi que le nombre de calculs à effectuer par l'unité de calcul 5 pour générer les images échographiques élémentaires par formation de faisceaux (i.e. *« beamforming »*)
- et en conservant un Rapport Signal sur Bruit et un contraste suffisants pour obtenir une image échographique finale de bonne qualité affichable sur l'unité d'affichage 6.

A cet effet, la solution décrite dans la suite comprend la mise en oeuvre de différentes étapes :

i) l'émission successive par la sonde, (d'au moins) des première et deuxième ondes ultrasonores en réponse à l'application successive de premier et deuxième signaux d'excitation électriques dans au moins des première et deuxième bandes de fréquences étroites et distinctes contenues dans la plage de fréquence d'excitation du transducteur,

ii) la réception par chaque transducteur, (d'au moins) des premier et deuxième échos acoustiques respectifs dus aux réflexions respectives des première et deuxième ondes ultrasonores à l'interface d'un objet cible, et la conversion des premier et deuxième échos acoustiques en premier et deuxième signaux électriques de réception respectifs,

iii) pré-traitement des premier et deuxième signaux électriques de réception pour chaque transducteur, le pré-traitement consistant en :

a. la numérisation des premier et au moins deuxième signaux électriques de réception pour obtenir des premier et deuxième signaux numériques,

b. le mixage de chaque premier et au moins deuxième signal numérique pour obtenir des premier et deuxième signaux mixés,

c. le filtrage passe-bas de chaque premier et deuxième signal mixé pour obtenir des premier et deuxième signaux filtrés,

d. la décimation de chaque premier et deuxième signal filtré pour obtenir des premier et deuxième signaux décimés.

Toutes ces étapes sont mises en oeuvre dans la sonde :

- l'étape « *i* » est mise en oeuvre dans l'étage d'émission 421 de la sonde 4, et
- les étapes « *ii à iii* » sont mises en oeuvre dans l'étage de réception 422 de la sonde 4.

### 2.1. *Etape i) d'émission à partir de signaux d'excitation en bandes étroites*

La sonde, composée d'une pluralité de transducteurs, est apte à émettre une pluralité d'ondes ultrasonores (plane ou divergente (notamment sphérique)) en séquence, chaque onde ultrasonore étant émise en réponse à l'application d'un signal d'excitation respectif ayant un spectre d'énergie centré sur une fréquence centrale différente des fréquences centrales des spectres d'énergie associés aux autres signaux d'excitation pour la génération des autres ondes ultrasonores de la pluralité.

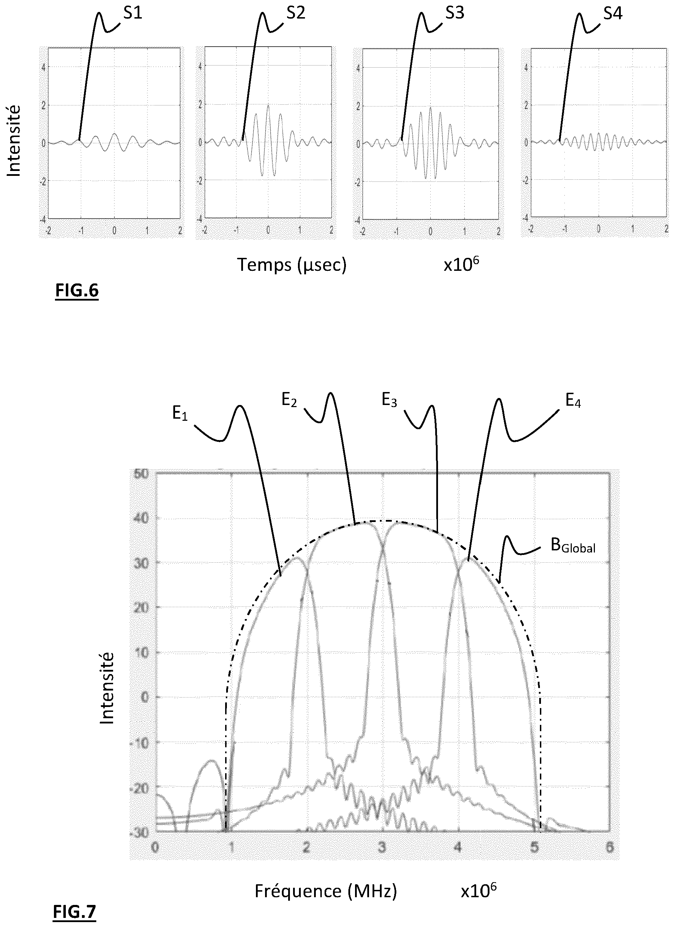

Par exemple en référence aux figure 6 et 7, chaque transducteur peut être adapté pour émettre successivement quatre ondes ultrasonores en réponse à l'application successive de quatre signaux d'excitation S1, S2, S3, S4 (cf. figure 6) ayant chacun un spectre d'énergie en bande étroite propre E1, E2, E3, E4 (cf. figure 7).

En d'autres termes pour chaque signal d'excitation S1-S4, la bande étroite du spectre d'énergie E1-E4 est différente des bandes étroites des spectres d'énergie associés aux autres signaux d'excitation (i.e. E1≠E2≠E3≠E4), ce spectre d'énergie en bande étroite propre E1-E4 ayant une fréquence centrale distincte des fréquences centrales des autres spectres.

Comme illustré à la figure 7, le spectre d'énergie E1-E4 de chaque signal d'excitation électrique S1-S4 est contenu dans la largeur de bande disponible $B_{Global}$ du transducteur. Par ailleurs, les spectres d'énergies adjacents E1/E2, E2/E3 , E3/E4 de deux signaux d'excitation distincts S1/S2, S2/S3, S3/S4 peuvent se chevaucher partiellement. Dans tous les cas, les fréquences centrales des spectres d'énergie associés aux différents signaux d'excitation sont différentes.

Dans un mode de réalisation, les ondes ultrasonores en bandes étroites peuvent être émises dans une même direction vers un objet cible. Dans ce cas à chaque tir, tous les transducteurs de la sonde émettent successivement les ondes ultrasonores en bandes étroites selon une direction et un angle donné. L'opération est répétée selon différents angles (5 à 10).

En variante, les ondes ultrasonores en bandes étroites peuvent être émises selon des directions différentes. Dans ce cas à chaque tir, les transducteurs émettent uniquement une onde ultrasonore en bande étroite respective par direction (angle ou position) donnée. Par exemple, si les transducteurs sont supposés émettre huit ondes ultrasonores en bandes étroites distinctes, huit tirs selon des directions distinctes sont effectués, une onde ultrasonore en bande étroite respective étant émise par les transducteurs pour chaque tir. Lorsque les ondes ultrasonores en bandes étroites sont émises selon des directions différentes, chaque onde ultrasonore peut être adjointe à une direction respective selon une fonction bien choisie de la fréquence centrale de son signal d'excitation associé. En particulier, chaque onde ultrasonore obtenue à partir d'un signal d'excitation dont la fréquence centrale appartient au domaine des hautes fréquences (i.e. $f_c \geq 3$ MHz) peut être adjointe à une direction ayant un angle compris entre 0 et 15° relativement à une normale au jeu de transducteurs 41 (les ondes ultrasonore associées aux signaux d'excitation de fréquences centrales inférieures étant adjointe à des directions formant un angle supérieur à 15° par rapport à la normale au jeu de transducteurs 41). Ceci permet de limiter la perte d'information liée à la formation de lobes de réseau dans les hautes fréquences.

L'utilisation d'ondes ultrasonore obtenues à partir de signaux d'excitation à spectres fréquentiels en bandes étroites permet d'améliorer le Rapport Signal sur Bruit des images échographiques obtenues ainsi que décrit dans l'art antérieur : Si les signaux reçus de chaque bande étroite sont filtrés selon le gabarit de la bande utilisée avant d'être sommés, alors le signal à bruit de la somme est supérieur à celui obtenu en bande large avec la même excitation d'un facteur égal au nombre de sous-bandes k. Ceci provient du fait que le signal somme sera approximativement k fois plus intense que le signal large bande, alors que le bruit agrégé des sous bandes filtrées ne sera pas plus élevé que le bruit d'un signal large bande.

### 2.2. Etape ii) de réception d'échos acoustiques et de conversion en signaux électriques

Comme indiqué précédemment, la bande de fréquences du spectre d'énergie $B_{Global}$ du transducteur est subdivisée en une pluralité de sous-bandes étroites, et des signaux d'excitation des transducteurs ayant des spectres d'énergie correspondant à chacune de ces sous-bandes sont appliqués successivement au jeu de transducteurs 41 par l'étage émetteur 421 de l'unité d'acquisition 42.

Pour chaque transducteur du jeu, l'application successive des signaux d'excitation induit l'émission successive d'une pluralité d'ondes ultrasonore par ledit transducteur, chaque onde ultrasonore émise étant associée à un signal d'excitation de spectre d'énergie en bande étroite respectif.

Chaque onde ultrasonore incidente émise - par exemple une onde plane ou divergente ou sphérique (etc.) et même focalisée dans le pire des cas - se propage dans le milieu à imager, puis des signaux bruts captés par les transducteurs du jeu 41 sont enregistrés par l'étage récepteur 422.

Chaque signal brut correspond à la conversion, par les transducteurs du jeu 41, d'une onde ultrasonore réfléchie - i.e. écho acoustique - réverbérée par les diffuseurs du milieu à partir de l'onde incidente.

Une telle étape de réception d'un écho acoustique et sa conversion en signal électrique (appelé dans la suite « signal écho ») étant connue de l'homme du métier, celle-ci ne sera pas décrite plus en détails dans la suite. Le lecteur appréciera néanmoins que les signaux échos ainsi obtenus (et représentatifs des échos acoustiques captés par les transducteurs du jeu 41) sont des signaux analogiques.

### 2.3. Pré-traitement des signaux échos

#### 2.3.1. Numérisation

L'étape de numérisation 100 permet de transformer les signaux échos analogiques issus de chaque transducteur en signaux numériques.

L'étape de numérisation est mise en oeuvre par des Convertisseurs Analogique/Numérique intégrés à l'étage de réception de la sonde. Le nombre de Convertisseurs Analogique/Numérique est choisi pour traiter l'ensemble des signaux issus de chacun des éléments de la sonde par exemple idéalement égal au nombre de transducteurs du jeu de transducteurs.

Chaque Convertisseur Analogique/Numérique échantillonne chaque signal écho analogique de son transducteur associé, à une fréquence d'échantillonnage Fs prédéterminée, et convertit les signaux échos analogiques en signaux numériques.

La fréquence d'échantillonnage Fs est de préférence la même pour tous les tirs, mais sans que cela ne soit une obligation, et choisie pour être supérieure au double de la fréquence maximale présente dans le signal écho analogique considéré. Ceci permet d'éviter d'éventuelles interférences (i.e. mélange) entre les spectres répliqués du signal électrique analogique de réception considéré (critère de Nyquist-Shannon). On peut choisir une fréquence d'échantillonnage Fs typiquement voisine du quadruple de la fréquence centrale de la sonde Fc. L'avantage d'une fréquence unique d'échantillonnage est la simplification du filtre analogique anti-repliement, qui est aussi unique.

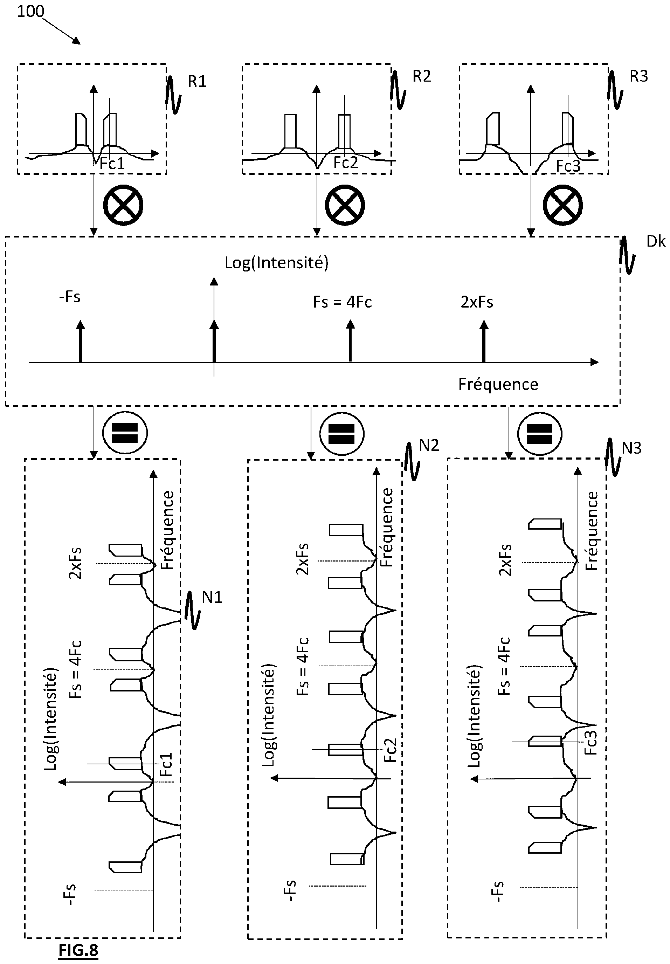

En référence à la figure 8, on a illustré schématiquement l'étape de numérisation dans le cas d'un transducteur :

- ayant émis successivement trois ondes ultrasonore en réponse à l'application successive de trois signaux d'excitation S1, S2, S3 de fréquences centrales respectives $F_{C1}$, $F_{C2}$, Fcs distinctes et contenues dans la plage de fréquence d'excitation du transducteur, et

- ayant permis l'obtention de trois signaux échos analogiques représentatifs de trois échos acoustiques reçus successivement par le transducteur en réponse.

Chaque signal écho analogique est multiplié par un peigne de Dirac de période 1/Fs, où Fs est la fréquence d'échantillonnage, et dont le spectre fréquentiel $D_K$ (qui n'est autre qu'un autre peigne de Dirac aux fréquences multiples de Fs) est illustré à la figure 8. Plus précisément, le spectre fréquentiel R1, R2, R3 de chaque signal écho est convolué par le spectre fréquentiel $D_K$ dans l'espace de Fourier.

On obtient ainsi un signal numérique de spectre N1, N2, N3 pour chaque signal écho analogique correspondant à un transducteur, le spectre N1, N2, N3 de chaque signal numérique correspondant à la réplication du spectre fréquentiel R1, R2, R3 de chaque signal écho autour de chaque raie du spectre fréquentiel $D_K$.

Le lecteur appréciera de la figure 8 que pour éviter un mélange des spectres répliqués, il est nécessaire (Nyquist) que la fréquence d'échantillonnage soit supérieure au double de la fréquence maximale du signal électrique de réception considéré (Fs > 2 x 1.5Fc où Fc est la fréquence centrale de la sonde, et où la bande passante totale de la sonde n'est pas supérieure à sa fréquence centrale (largeur de bande inférieure à 100%))).

On entend par « *fréquence centrale de la sonde* », la fréquence centrale de la bande de fréquences de fonctionnement des transducteurs (les transducteurs ne générant pas d'ondes ultrasonores lorsqu'un signal électrique de fréquence non-contenue dans cette bande leur est appliqué).

Dans l'exemple illustré à la figure 8, la fréquence d'échantillonnage est choisie constante pour chaque signal écho à numériser. Plus précisément, cette fréquence d'échantillonnage est choisie égale à quatre fois la fréquence centrale de la bande de fréquences utiles du transducteur (c'est-à-dire les fréquences pour lesquelles le transducteur est apte à émettre ou recevoir une onde ultrasonore) :

$$F_S = 4xFc,$$

Où Fc est la fréquence centrale de la bande de fréquences utiles du transducteur (plage de fréquences d'excitation du transducteur).

Le lecteur appréciera que si plusieurs des spectres R1, R2 et R3 sont disjoints, alors les émissions générant les signaux correspondants peuvent être émises immédiatement à la suite l'une de l'autre, voire même simultanément, les échos résultants se superposant temporellement et pouvant donc être échantillonnés et numérisés en une opération unique. On obtient alors un « *enregistrement unique* » numérisé incluant des informations représentatives de chacun des signaux échos, les opérations suivantes de démodulation spécifiques à chaque sous bande pouvant être menées sur cet « *enregistrement unique* » numérisé (correspondant à un unique signal numérisé). Ainsi il sera entendu que l'utilisation, dans les revendications, de l'expression « *numérisation des premier et deuxième signaux électriques de réception pour obtenir des premier et deuxième signaux numériques* », couvre à la fois :

- le cas de la numérisation de signaux électriques distincts associés chacun à un signal écho respectif, et
- le cas de la numérisation d'un signal électrique unique incluant des informations représentatives de chacun des signaux échos.

En variante, la fréquence d'échantillonnage pourrait être adaptée à chaque bande échantillonnée, à condition que le filtre analogique anti-repliement puisse aussi être adapté pour éviter les repliements de spectre.

L'étape de numérisation permet ainsi d'obtenir pour chaque transducteur, un nombre maximum « *k* » de signaux numériques, où « *k* » représente le nombre de signaux d'excitation en bandes étroites appliqués au transducteur.

En supposant que le jeu de transducteurs 41 de la sonde est composé d'un nombre « *X* » de transducteurs (128, 256, etc.), et que la numérisation est mise en oeuvre sur « *n* » bits, alors le débit total $D_{tot}$ de données numérisées est :

$$D_{tot} = X \text{ x } 4 \text{ x } F_C \text{ x } n$$

Pour 128 transducteurs travaillant à une fréquence centrale de 10 MHz et une numérisation sur 14 bits cela donne près de 72 Gb/sec, soit un débit de données très élevé.

L'opération de démodulation qui suit permet de réduire ce débit de données en profitant du fait que le système a une bande passante limitée.

Plus précisément, la démodulation permet d'extraire l'information contenue dans chaque signal numérique obtenu à l'issu de l'étape de numérisation. En particulier, la démodulation permet de centrer le spectre N1, N2, N3 de chaque signal numérique autour de la fréquence nulle.

Cette démodulation dite « *I-Q* » est réalisée par deux mélanges de fréquence en phase (I) et en quadrature (Q) entre chaque signal numérique issu de l'étape de numérisation, et un oscillateur local à la fréquence de démodulation $F_d$.

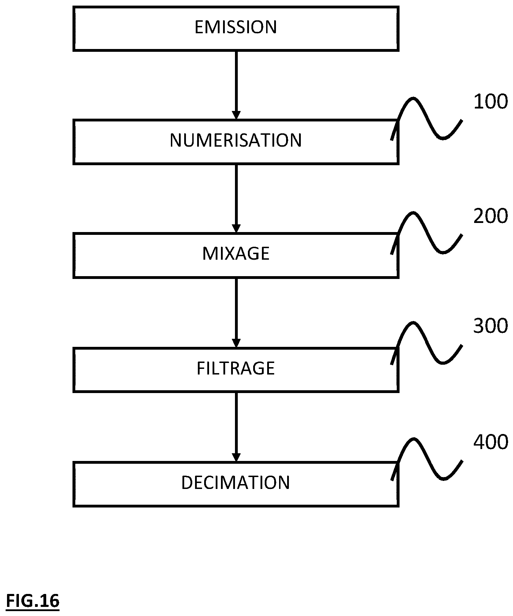

Comme illustré à la figure 16, l'opération de démodulation comprend une étape de mixage 200 et une étape de filtrage 300.

### 2.3.2. *Mixage*

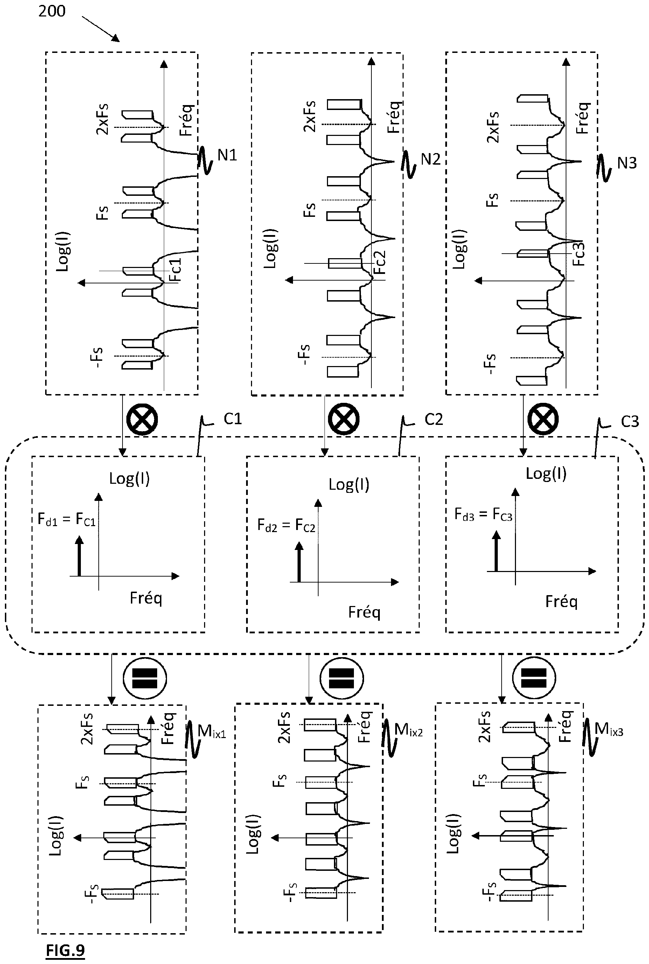

En référence à la figure 9, on a illustré l'étape de mixage des signaux numériques de spectres N1, N2, N3 obtenus à l'issue de l'étape de numérisation dans le cas du transducteur ayant émis successivement trois ondes ultrasonores en réponse à l'application successive des trois signaux d'excitation S1, S2, S3 de fréquences centrales $F_{C1}$, $F_{C2}$, $F_{C3}$.

Avantageusement, la fréquence de mixage $F_d$ utilisée pour mixer chaque signal numérique est choisie égale à la fréquence centrale $F_{C1}$, $F_{C2}$, Fcs du signal d'excitation ayant permis l'obtention de l'écho acoustique correspondant au signal numérique considéré. En d'autres termes, chaque signal numérique est mixé à la fréquence centrale de son signal d'excitation associé.

Ainsi et comme illustré à la figure 9 pour l'étape dite de mixage :

- pour le signal numérique de spectre N1 correspondant à la numérisation du signal électrique de réception associé au spectre R1, la fréquence de mixage $F_{d1}$ est choisie égale à $F_{C1}$, où $F_{C1}$ est la fréquence centrale du signal électrique d'excitation S1,
- pour le signal numérique de spectre N2 correspondant à la numérisation du signal électrique de réception associé au spectre R2, la fréquence de mixage $F_{d2}$ est choisie égale à $F_{C2}$ (fréquence centrale du signal électrique d'excitation S2), avec $F_{C2}$ supérieure à $F_{C1}$,
- pour le signal numérique de spectre N3 correspondant à la numérisation du signal électrique de réception associé au spectre R3, la fréquence de mixage $F_{d3}$ est choisie égale à $F_{C3}$ (fréquence centrale du signal électrique d'excitation S3), avec $F_{C3} > F_{C2} > F_{C1}$.

Plus précisément l'étape de mixage 200 de la démodulation consiste, pour chaque signal numérique considéré, à multiplier ledit signal numérique par un signal complexe de la forme suivante :

$$\cos(2\pi*F_d*t) - i*\sin(2\pi*F_d*t),$$

Où $F_d$ correspond à la fréquence de mixage, ladite fréquence de mixage étant choisie égale à la fréquence centrale $F_{C1}$ (respectivement $F_{C2}$, respectivement Fcs) du signal électrique d'excitation S1 (respectivement S2, respectivement S3) associé au signal numérique considéré N1 (respectivement N2, respectivement N3).

Dans le domaine fréquentiel et comme illustré à la figure 9, le mixage consiste à convoler le spectre N1 (respectivement N2, respectivement N3) du signal numérique par le spectre C1 (respectivement C2, respectivement C3) du signal complexe de mixage à fréquence $F_{d1} = F_{C1}$ (respectivement $F_{d2} = F_{C2}$, respectivement $F_{d3}$ = Fes). On obtient ainsi un signal mixé dont le spectre $Mix_1$ (respectivement $Mix_2$, respectivement $Mix_3$) est illustré à la figure 9.

Le fait que le mixage de chaque signal numérique soit mis en oeuvre à une fréquence de mixage différente - et en particulier à une fréquence de mixage égale à la fréquence centrale de la bande de fréquences du signal d'excitation associé au signal numérique - permettra de maximiser la décimation subséquente afin de réduire de manière optimale le nombre de données à transmettre de la sonde 4 vers l'unité de calcul externe 5.

Le lecteur appréciera que le procédé peut comprendre plusieurs étapes de mixage pour chaque signal numérique à plusieurs fréquences différentes, par exemple :

- une première étape de mixage de chaque signal à la fréquence centrale ($F_{C1}$, $F_{C2}$, Fcs, etc.) du signal d'excitation, et
- une deuxième étape de mixage à un multiple de cette fréquence centrale du signal d'excitation (par exemple la moitié et/ou le double et/ou le triple de la fréquence centrale du signal d'excitation), etc.

Ceci permet de tenir compte des informations contenues dans les bandes fondamentale et harmoniques dans le signal numérique considéré pour les étapes de traitement ultérieures (par exemple formation d'image ou extractions de données représentatives de la région d'intérêt).

### 2.3.3. *Filtrage*

L'étape de filtrage 300 permet après mixage, d'éliminer les signaux présents à une fréquence égale à la somme de la fréquence de signal et de la fréquence de mixage, c'est-à-dire dans notre cas les signaux présents autour du double de la fréquence de mixage.

Plus précisément, l'étape de filtrage consiste en l'application d'un filtre passe-bas à chaque signal mixé afin d'éliminer ces composants à fréquence double.

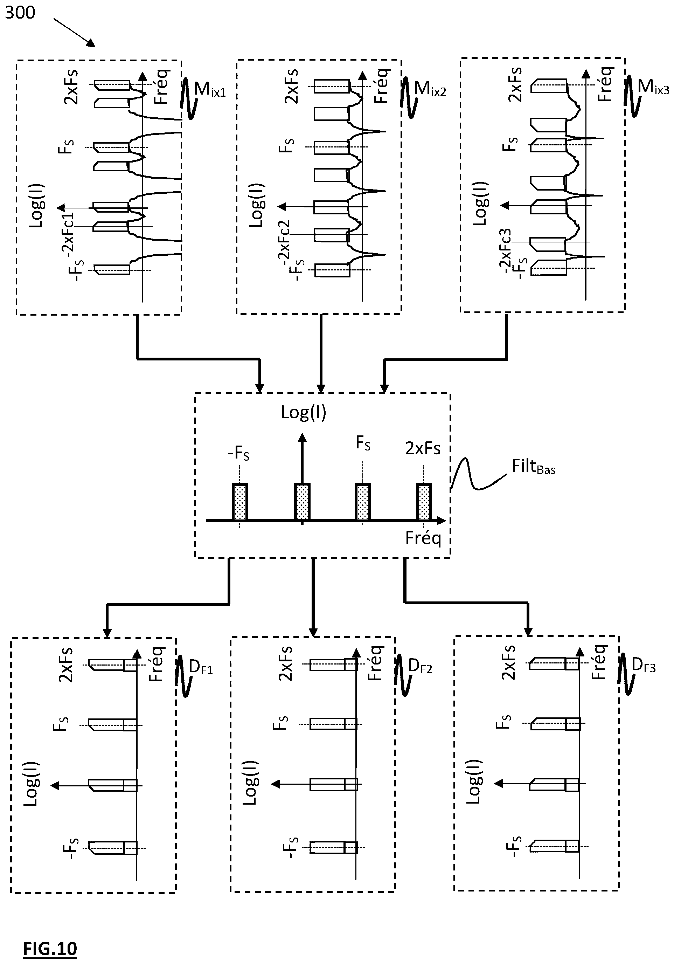

En référence à la figure 10, on a illustré l'étape de filtrage des signaux mixés de spectres $Mix_1$, $Mix_2$, $Mix_3$. L'étape de filtrage consiste en la multiplication de chaque spectre $Mix_1$, $Mix_2$, $Mix_3$ par le spectre $Filt_{Bas}$ du filtre passe-bas de largeur égale à la bande de fréquences du signal d'excitation S1, S2, S3 associé au signal mixé considéré. On obtient ainsi des signaux filtrés de spectres $D_{F1}$, $D_{F2}$, $D_{F3}$, chaque signal filtré étant associé à un signal électrique d'excitation S1, S2, S3 respectif.

L'étape de filtrage permet de ne conserver que les portions du spectre situées à un multiple de la fréquence d'échantillonnage. Le spectre du signal est donc « *nettoyé* » entre les occurrences successives du spectre aux différents multiples de la fréquence d'échantillonnage.

Ceci permet d'épurer le spectre du signal en vue de l'étape ultérieure de décimation. Plus précisément, le filtrage passe-bas permet de supprimer les composantes des signaux au double des fréquences de mixage. On évite ainsi les risques de chevauchement des signaux lors de l'étape ultérieure de décimation.

L'application des étapes de mixage et de filtrage (mixage + filtrage = démodulation) sur chacun des signaux numériques permet d'obtenir des signaux démodulés.

### 2.3.4. *Décimation*

L'étape de décimation 400 consiste à supprimer périodiquement un nombre « $\alpha$ » d'échantillons pour di-

minuer la quantité de données à transmettre de la sonde vers un dispositif de traitement distant. Par exemple, le facteur de décimation peut être de quatre : l'étape de décimation consiste alors en la suppression de trois échantillons sur quatre du signal démodulé pour chaque sous-bande. On entend par « *échantillon* » une paire IQ démodulée.

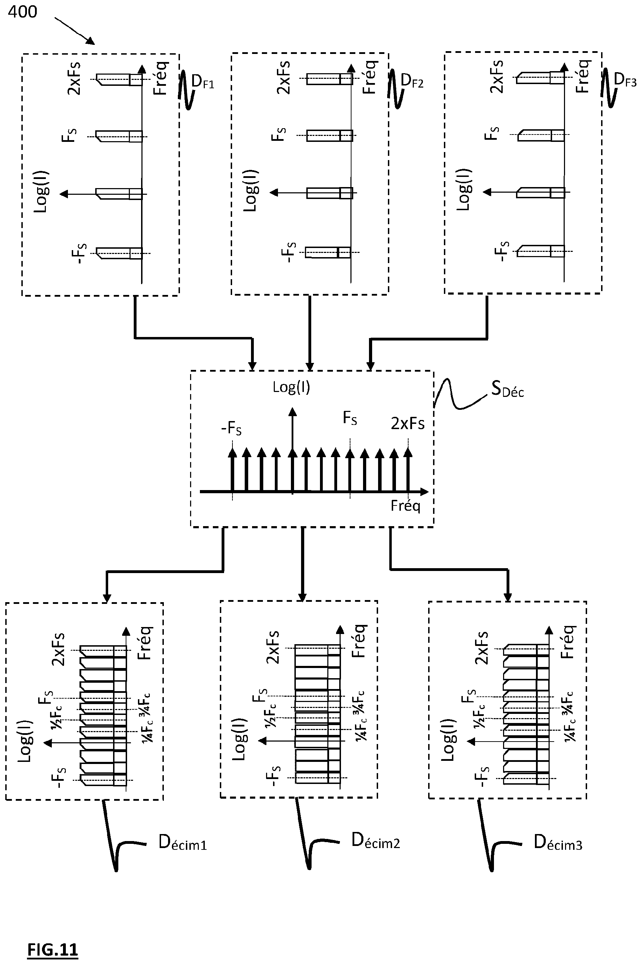

En référence à la figure 11, on a illustré un exemple d'étape de décimation. Chaque signal filtré est multiplié par un peigne de Dirac de période 4/Fs, où Fs est la fréquence d'échantillonnage, et dont le spectre fréquentiel Soéc (qui n'est autre qu'un autre peigne de Dirac aux fréquences multiples de Fs/4) est illustré à la figure 11. Plus précisément le spectre fréquentiel $D_{F1}$, $D_{F2}$, $D_{F3}$ de chaque signal filtré est convolué par le spectre fréquentiel $S_{Déc}$ dans l'espace de Fourier.

On obtient ainsi un signal décimé de spectre $D_{écim1}$, $D_{écim2}$, $D_{écim3}$ pour chaque signal démodulé, le spectre $D_{écim1}$, $D_{écim2}$, $D_{écim3}$ de chaque signal démodulé correspondant à la réplication du spectre fréquentiel $D_{F1}$, $D_{F2}$, $D_{F3}$ de chaque signal démodulé autour de chaque raie du spectre fréquentiel Soéc.

Ainsi, l'opération de démodulation-décimation permet de réduire le nombre de données à transmettre entre la sonde et le dispositif de traitement distant.

Les données prétraitées par la sonde peuvent ensuite être transmises vers le dispositif de traitement distant pour l'application de différents algorithmes de traitement. Le lecteur appréciera que les données prétraitées ne sont pas des images échographiques, la réalisation d'une image échographique nécessitant un traitement des signaux bruts, par exemple par formation de voie (ou « *beamforming* » selon la terminologie anglosaxonne). Bien entendu, d'autres techniques connues de l'homme du métier peuvent être utilisées :

- pour reconstruire l'image (ou les images) échographique(s), ou
- pour calculer directement à partir des données brutes, des informations représentatives de la région d'intérêt (élastographie grâce à une solution de réseau de neurones, etc.) sans reconstruction d'image intermédiaire.

### 3. *Théorie relative à l'invention*

On va maintenant présenter différents éléments théoriques relatifs à l'invention pour permettre à l'homme du métier de mieux comprendre les avantages associés à la solution décrite ci-dessus.

### 3.1. *Amélioration du Rapport Signal sur Bruit*

### 3.1.1. *Bande de fréquences de chaque signal d'excitation*

Comme indiqué précédemment, l'une des caractéristiques de la présente invention consiste à remplacer une excitation très courte de grande amplitude, se rapprochant d'un Dirac idéal, par la somme cohérente de plusieurs trains d'excitations S1, S2, S3, S4 effectués à différentes fréquences choisies équiréparties dans la bande de fréquences utile du transducteur, et présentant toutes la même phase, par exemple une phase nulle (un maximum) à la moitié de leur durée (cf. figure 6).

La sommation cohérente de plusieurs signaux d'excitation de spectres fréquentiels en bandes étroites permet, lorsque les caractéristiques des signaux sont bien choisies (phases identiques, recouvrement adapté des bandes), d'obtenir un signal résultant de spectre fréquentiel à large bande ayant un Rapport Signal sur Bruit amélioré par rapport à un signal d'excitation de spectre fréquentiel large bande. Les bandes étroites des spectres fréquentiels des différents signaux d'excitation - ci-après dénommées « *sous-bande* » - sont adjacentes les unes aux autres, avec quelques chevauchements, et leur largeur et forme de bande agrégées correspondent à la largeur et à la forme de la bande de fréquences utiles du transducteur.

En d'autres termes, le spectre d'un signal d'excitation large bande est « *découpé* » en « *N* » sous-bandes, et « *N* » signaux d'excitation dont les spectres correspondant à ces « *N* » sous-bandes sont calculés. Ceci permet d'améliorer le Rapport Signal sur Bruit d'un facteur voisin de « *N* ».

Toutefois, si cette caractéristique de l'invention permet d'améliorer le Rapport Signal sur Bruit d'un facteur « *N* », elle induit également une multiplication par un facteur « *N* » de la quantité de données à transmettre entre la sonde et le dispositif de traitement distant (« *N* » tirs étant nécessaires pour la formation d'une image échographique à partir de « *N* » sous-bandes).

Pour limiter la quantité de données à transmettre, la solution décrite ci-dessus comprend donc d'autres caractéristiques, et notamment :

- la numérisation des signaux reçus sur chaque transducteur,
- le mixage de chaque signal numérisé à la fréquence centrale de la sous-bande associée au signal numérisé considéré,
- le filtrage passe-bas de chaque signal mixé par un filtre passe bas dont l'atténuation, à la fréquence moitié de la largeur fréquentielle de la sous-bande associée au signal mixé considéré, est comprise en 2 dB et 10 dB,
- la décimation de chaque signal filtré d'un facteur « *G* » croissant avec le nombre de sous-bandes « *N* »,
- l'utilisation de fréquences différentes par angles dans le cadre de l'imagerie synthétique pour améliorer la résolution spatiale ainsi que le contraste.

### 3.1.2. *Forme des signaux d'excitation*

Les quatre signaux bande étroite de la figure 6 dont l'addition donne un signal bande large de durée écourtée sont la convolution :

- d'une excitation d'émission,
- de la réponse impulsionnelle de la sonde, et
- de la réponse du filtre bande étroite de réception qui est en fait le passe bas de démodulation car nous nous limitons à des systèmes où les données reçues sont démodulées.

Les résultats finaux de ces convolutions sont des signaux numériques résultants dont les spectres $E_1$, $E_2$, $E_3$, $E_4$ (cf. figure 7) se raccordent de façon à synthétiser au mieux une bande globale $B_{Global}$ avec une réponse impulsionnelle de durée minimale. Ainsi par exemple, s'il n'y a pas de distorsion de phase dans chaque sous-bande, les spectres $E_1$-$E_2$, $E_2$-$E_3$, $E_3$-$E_4$ de deux bandes adjacentes peuvent se croiser à -6dB sous la bande globale $B_{Global}$ que l'on souhaite synthétiser. Bien entendu, d'autres types de raccordement avec phase non constante peuvent être utilisés (comme proposé dans le domaine des haut-parleurs haute-fidélité multivoies).

Les caractéristiques techniques de la sonde (transducteur, etc.) étant fixées, il est possible de faire varier la forme de chaque signal d'excitation ainsi que le gabarit du filtre passe-bas utilisé lors de l'opération de démodulation visant à réduire la quantité de données à transmettre entre la sonde et le dispositif de traitement distant. En particulier, la numérisation des données acquises par les transducteurs permet d'ajuster le gabarit du filtre de démodulation avec une bien plus grande précision que dans le cas d'une solution analogique.

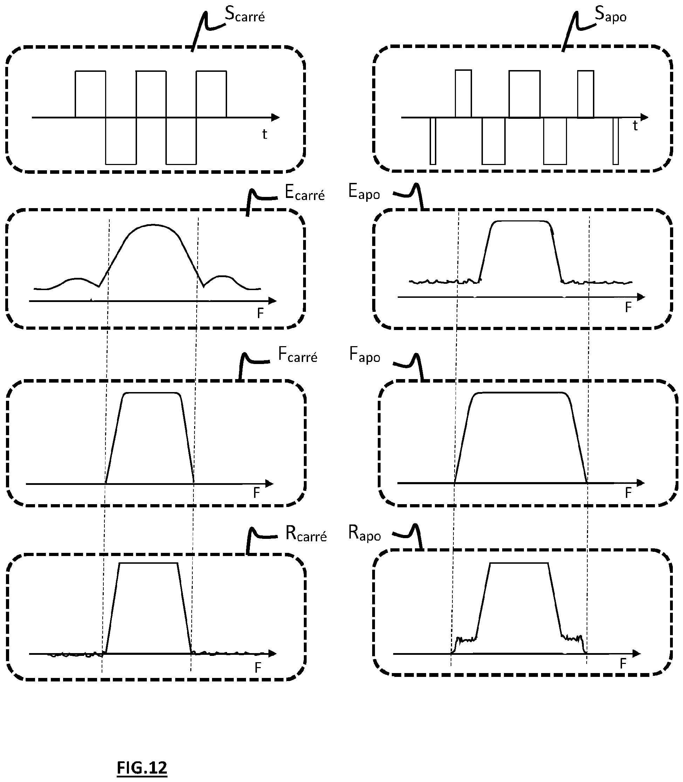

Ainsi, différentes formes de signal d'excitation peuvent être utilisées. A titre d'exemple, on a illustré à la figure 12 deux exemples de signaux d'excitation $S_{carré}$, $S_{apo}$ permettant d'aboutir au même signal final en bande étroite en fin de prétraitement.

Dans une première variante de réalisation, le signal d'excitation $S_{carré}$ pour la génération d'une onde ultrasonore par chaque transducteur peut être de forme carrée (i.e. composé d'une pluralité de cycles à tension fixe). Le signal écho reçu par chaque transducteur (qui est représentatif d'une portion de l'onde ultrasonore rétrodiffusée vers le transducteur) présente alors un spectre fréquentiel $E_{carré}$ de forme sin(x)/x qui déborde de la sous-bande de fréquences désirée in fine. Lors des étapes subséquentes de mixage/filtrage/décimation, il est alors préférable d'utiliser un filtre passe-bas $F_{carré}$ dont la largeur est sensiblement voisine de la largeur de la sous-bande de fréquences souhaitée. A l'issue de l'étape de décimation (non représentée), un signal final en bande étroite de spectre $R_{carré}$ souhaité est obtenu. Cette première solution (i.e. signal d'excitation de forme carrée) présente l'avantage d'être facile à mettre en oeuvre, et permet de supprimer efficacement le bruit B en dehors de la sous-bande considérée.

Dans une deuxième variante de réalisation, le signal d'excitation $S_{apo}$ peut être de forme apodisée (i.e. composé d'une pluralité de créneaux à tension fixe de largeur variable et présentant une symétrie axiale sur une période de temps donnée). Un tel signal d'excitation de forme apodisée $S_{apo}$ peut être obtenu en utilisant un générateur d'impulsions de type « PWM » (sigle de l'expression anglo-saxonne « Puise Width Modulation »). Le signal écho reçu par chaque transducteur présente alors un spectre fréquentiel $E_{apo}$ de largeur voisine de celle souhaitée in fine pour la sous-bande visée. Lors des étapes subséquentes de mixage/filtrage/décimation, un filtre passe-bas ($F_{apo}$) - dont la largeur est dans ce cas supérieure à la largeur fréquentielle de la sous-bande visée est appliqué. A l'issue de l'étape de décimation (non représentée), un signal final en bande étroite de spectre $R_{apo}$ est obtenu. Cette deuxième solution (i.e. signal d'excitation de forme apodisée) même si plus complexe à mettre en oeuvre, présente l'avantage d'être plus efficace énergétiquement que la première variante (en effet dans la première variante, des portions du signal écho s'étendent hors de la sous-bande du signal d'excitation : cela signifie que la partie de l'énergie émise ayant permis l'acquisition de ces portions du signal écho sont émises en pure perte puisque filtré par le filtre passe-bas lors de l'étape de filtrage).

### 3.2. *Mixage/Filtraoe/Décimation*

Comme indiqué précédemment, les signaux échos générés par les transducteurs en réponse à la réception des échos acoustiques sont numérisés préalablement à la mise en oeuvre des étapes de mixage, filtrage et décimation. Cette étape de numérisation ne sera pas décrite plus en détails dans la suite.

Le lecteur retiendra toutefois que la numérisation des signaux écho analogiques issus des transducteurs permet :

- d'une part de faciliter la mise en oeuvre des étapes ultérieures de mixage, filtrage et décimation, et
- d'autre part de maximiser l'efficacité des étapes ultérieures de mixage, filtrage et décimation afin de réduire au maximum la quantité de données à transférer entre la sonde et le dispositif de traitement distant.

Les signaux à traiter lors des étapes de mixage/filtrage/décimation étant numérisés, il est possible de démoduler (i.e. mixer + filtrer) chaque sous-bande afin de pouvoir profiter de la largeur de bande limitée du système et faire de la décimation ainsi qu'expliqué précédemment. De façon à ce que le facteur de décimation puisse être maximum, une fréquence de démodulation différente est choisie pour chaque sous bande. Plus précisément pour chaque sous-bande, la fréquence de mixage choisie pour mixer le signal écho numérisé est égale à la fréquence centrale de la sous-bande (ou un multiple de la fréquence centrale de la sous-bande).

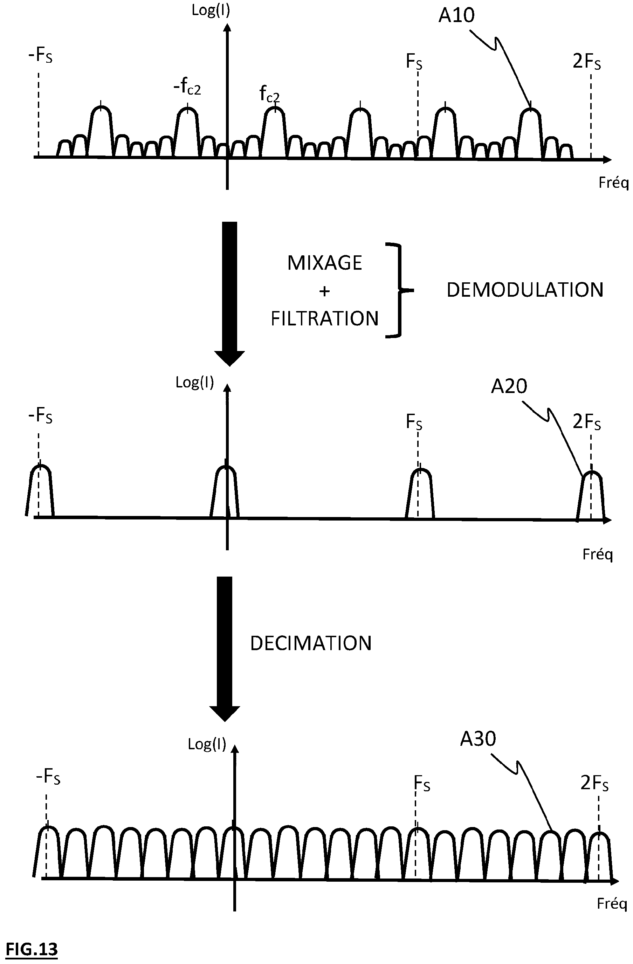

La figure 13 illustre les étapes de mixage/filtration/décimation du spectre A10 d'un signal écho numérisé dont la fréquence centrale de la sous-bande est $f_{c2}$. Le signal écho est mixé à la fréquence centrale $f_{c2}$ de la sous-bande de son signal d'excitation associé, et filtré en utilisant un filtre passe-bas de fréquence de coupure égale à la moitié de la largeur de la sous bande. On obtient un signal mixé et filtré dont le spectre A20 est représenté à la figure 13. Ce signal mixé et filtré est ensuite décimé. Le signal décimé ainsi obtenu de spectre A30 peut ensuite être transmis au dispositif de traitement distant par la sonde.

Si la bande utile du transducteur est subdivisée en un nombre « *N* » de sous-bandes, alors les signaux mixés/filtrés/décimés vont devoir être transmis pour les « *N* » sous-bandes : donc « *N* » fois plus de signaux mixés/filtrés/décimés vont devoir être transmis entre la sonde et le dispositif de traitement distant par rapport à un signal à bande large.

Toutefois, pour chaque sous-bande, le facteur de décimation peut être « *N* » fois plus grand que dans le cas d'une décimation de signal à bande large (correspondant à la bande utile du transducteur), puisque chaque sous-bande est « *N* » fois plus étroite que la bande large totale.

On a donc à transmettre « *N* » fois plus de signaux mixés/filtrés/décimés en sous-bande, mais chaque signal mixé/filtré/décimé en sous-bande contient une quantité de données « *N* » fois moins importante qu'un signal mixé/filtré/décimé en bande large.

Ainsi, la technique décrite ci-dessus permet un gain du Rapport Signal sur Bruit d'un facteur « *N* » sans nécessiter la transmission d'une quantité de données plus importante que dans le cas d'un signal écho obtenu à partir d'un signal d'excitation unique large bande (i.e. dont la bande large correspond à la bande de fréquences utiles du transducteur).

Comme indiqué précédemment, la fréquence d'échantillonnage peut être choisie égale à *« K »* fois (typiquement K=4) la fréquence centrale de la bande de fréquences utiles de chaque transducteur : Fs = K*Fc (avec K$\geq$3 pour une largeur de bande de 100%). Le facteur de décimation peut donc être choisi égal à *« K*N »,* où *« K »* est égal au rapport de la fréquence d'échantillonnage utilisée lors de l'étape de numérisation divisée par la fréquence centrale de la bande de fréquences utiles de chaque transducteur. En pratique, on choisira un facteur de décimation égal à la partie entière de *« ½*K*N ».* Ceci permet de mieux préserver :

- les formes des signaux résultants pour chaque sous-bande, et
- la qualité de la restitution finale.

### 3.3. *Reconstruction d'images élémentaires par formation de faisceau*

Les données transférées par la sonde peuvent ensuite être traitées par le dispositif de traitement distant.

Le dispositif de traitement distant met en oeuvre différentes étapes.

L'une de ces étapes peut consister en la reconstruction d'images élémentaires par la technique dite de formation de faisceau (ou *« beamforming »* selon la terminologie anglo-saxonne) qui va maintenant être décrite dans le cadre de la présente invention. Pour mieux comprendre les avantages associés à la présente invention, la technique de formation de faisceau à partir d'une pluralité de signaux en bandes étroites sera décrite en la comparant au cas d'une formation de faisceau à partir d'un signal large bande.

Dans le cas d'un signal large bande de fréquences centrale Fc démodulé en se limitant au critère de Nyquist, l'étape de formation de faisceau nécessite le calcul d'un point complexe par cycle de signal reçu. Le pas axial entre deux points calculés adjacents est donc égal à $\frac{1}{2}\lambda_C$ (à cause de l'aller-retour de l'onde ultrasonore, deux points distants de $\frac{1}{2}\lambda_C$ se verront sur les signaux RF à un cycle d'écart).

Dans le cas de « *N* » signaux en bandes étroites (division de la large bande en « *N* » sous-bandes), l'étape de formation de faisceau de chaque signal en sous-bande nécessite le calcul de « *N/2* » fois moins de points qu'en large bande. En effet dans le cas de « *N* » signaux en sous-bandes, comme le critère de Nyquist est satisfait avec « *N/2* » fois moins de points, le grille de calcul aura un pas axial qui sera « *N/2* » fois plus grand qu'en large bande.

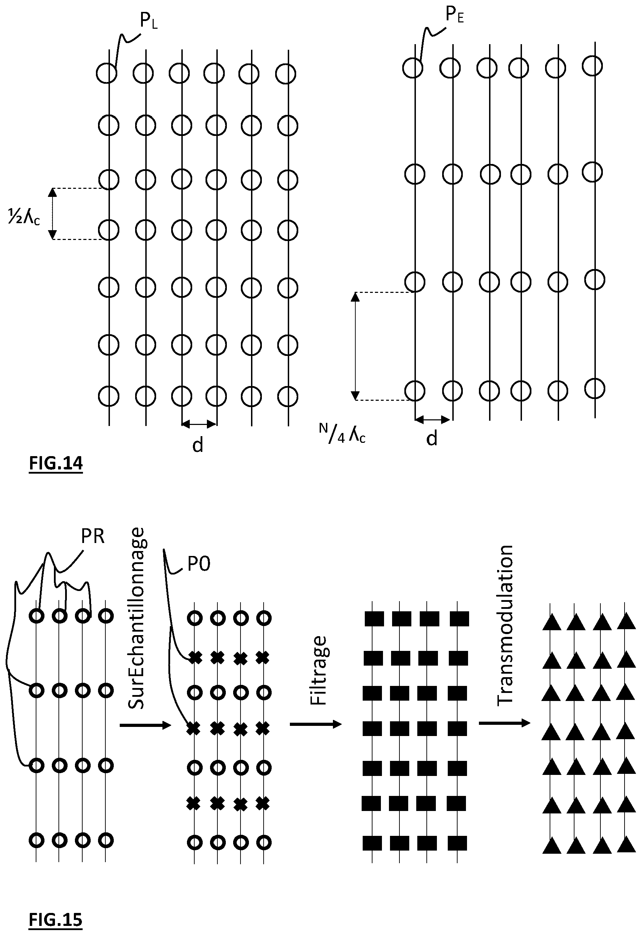

Ainsi et comme illustré à la figure 14 (pour N=4), la densité axiale de points $P_E$ à calculer pour « *N* » sous-bandes est « *N/2* » fois moins grande que la densité axiale de points $P_L$ à calculer pour une large bande. La densité latérale (correspondant à l'écart d entre deux transducteurs adjacents de la sonde) est la même pour un signal large bande que pour un signal sous-bande.

Ainsi la formation de faisceau des « *N* » signaux sous-bandes nécessite uniquement deux fois plus de calculs que pour la formation de faisceau d'un signal large bande. Ceci est vrai quel que soit le nombre de sous-bandes.

Par ailleurs, un avantage supplémentaire de la subdivision de la large bande d'un signal d'excitation en « *N* » sous-bandes présente l'avantage de permettre l'adaptation optimale de l'ouverture de reconstruction utilisée lors de l'étape de formation de faisceau.

En effet, pour reconstruire un point lors de l'étape de formation de faisceau, la portion du signal écho de chaque transducteur contribuant à ce point est recherchée. Or pour un point donné à reconstruire, les signaux échos de certains transducteurs du jeu de transducteurs de la sonde ne contiennent aucune information représentative de ce point. C'est en particulier le cas dans les hautes fréquences, pour les signaux échos des transducteurs dont l'angle entre :

- une normale passant par le centre du transducteur et
- une droite passant par le centre du transducteur et par le point à reconstruire,

est supérieur à une valeur qui décroît quand la fréquence augmente (les transducteurs étant directifs, ils ne reçoivent plus de signal au-delà d'un certain angle, et plus la fréquence est grande, plus cet angle est petit).

Ainsi dans le cadre de la présente invention, il est possible de faire varier l'ouverture de reconstruction (c'est-à-dire le nombre de transducteurs dont les signaux échos doivent être pris en compte dans la reconstruction d'un point considéré) en fonction de la fréquence de la sous-bande considérée. Plus la fréquence de la sous-bande est basse, plus l'ouverture de reconstruction sera importante (afin de maximiser la quantité d'information prise en compte dans la reconstruction du point considéré), plus la fréquence de la sous-bande est grande, plus l'ouverture de reconstruction sera faible (afin d'éviter d'intégrer du bruit dépourvu d'information dans la reconstruction du point considéré).

### 3.4. Combinaison

Une autre étape pour l'obtention d'une image échographique finale concerne la combinaison des images échographiques élémentaires formées lors de l'étape de formation de faisceaux.

Ainsi, chaque image partielle élémentaire étant obtenue pour une sous-bande respective, il est nécessaire de les placer dans un même repère de référence spatial et fréquentiel pour permettre leur sommation afin d'aboutir à une image échographique finale.

Ce placement dans un même repère de référence nécessite la mise en oeuvre d'une étape de conversion, l'étape de conversion incluant les sous-étapes suivantes pour chaque image élémentaire formée :

- suréchantillonnage des points de l'image élémentaire considérée (en référence à la figure 15, inclusion de (N/2-1) points $P_0$ de valeur nulle entre deux points $P_R$ reconstruits par formation de faisceau) pour obtenir un image élémentaire suréchantillonnée,
- filtrage passe-bas en profondeur des points de chaque image élémentaire suréchantillonnée afin d'interpoler les valeurs des points de l'image élémentaire suréchantillonnée, le filtrage permettant d'obtenir une image élémentaire filtrée,
- transmodulation par rotation linéaire de la phase des points de chaque image élémentaire filtrée pour la transmoduler autour de la fréquence centrale Fc du transducteur.

Une fois l'étape de transmodulation effectuée, les images élémentaires converties peuvent être sommées pour obtenir l'image échographique finale.

### 4. Conclusions

Le système et le procédé décrits précédemment permettent :

- d'améliorer le Rapport Signal sur Bruit des images obtenues à partir d'un échographe incluant :

  ◦ une sonde pour l'acquisition de données, et
  ◦ un dispositif de traitement distant pour le traitement des données acquises,

- tout en limitant la quantité de données à transférer de la sonde vers le dispositif de traitement distant.

Plus précisément, le fait de construire synthétiquement un signal en bande large (bande utile de chaque transducteur de la sonde) à partir « N » signaux échos en bandes étroites permet d'obtenir une image échographique ayant un Rapport Signal sur Bruit « N » fois supérieur à celui d'une image échographique obtenue à partir d'un signal écho en bande large.

Par ailleurs, le fait que :

- les signaux enregistrés par les transducteurs soient :

  ◦ démodulés à la fréquence moyenne de chaque bande étroite, démodulation effectuée par mixage avec signaux sinusoïdaux en quadrature (sinus et cosinus), et filtrage passe bas sur chaque composante I et Q, puis
  ◦ décimés jusqu'à ne garder que (alpha*B) paires IQ démodulées par seconde, où B est la largeur de la bande étroite en 1/sec, et alpha est un nombre réel sans dimension compris entre 1 et 3, idéalement choisi autour de 2 (si alpha=1 on travaille à la limite de Nyquist : il est préférable de prendre un peu de marge par rapport à cette limite)

permet de réduire la quantité de données à transmettre de la sonde vers le dispositif de traitement distant.

Le lecteur aura compris que de nombreuses modifications peuvent être apportées à l'invention décrite précédemment sans sortir matériellement des nouveaux enseignements et des avantages décrits ici.

En particulier, la présente invention peut être appliquée à d'autres domaines techniques que l'imagerie ultrasonore par échographie. Elle peut notamment s'appliquer au domaine des SONAR (acronyme de l'expression anglo-saxonne « *Sound Navigation And Ranging* »), et qui consiste en :

- l'émission (par une antenne) d'une impulsion sonore dans l'eau,
- la réception (par l'antenne) d'une onde écho correspondant à la réverbération de l'impulsion sonore sur les obstacles qu'elle rencontre,
- la conversion (par l'antenne) de l'onde écho en signal électrique de réception (ou signal écho), et
- le traitement (par une unité de calcul distante) du signal écho (transmis par l'antenne vers l'unité de calcul distante) pour obtenir une image SONAR.

Dans ce domaine SONAR :

- un signal impulsionnel temporellement court à large bande de fréquences pourrait être remplacé par une pluralité de signaux d'excitation à bandes étroites de fréquences, et
- les signaux échos obtenus pour chacun de ces signaux d'excitation à bandes étroites pourraient être prétraités (numérisation, mixage à la fréquence centrale du signal d'excitation à bande étroite considéré, filtrage passe bas et décimation) conformément aux différentes étapes décrites ci-dessus préalablement au transfert des données prétraitées vers l'unité de calcul distante.

Cette technique peut aussi être aussi adaptée au domaine du radar qui traite des impulsions électromagnétiques en lieu et place d'impulsions sonores ou ultrasonores, mais restant dans un même corpus technique qui est celui de l'émission et de la réception d'ondes cohérentes à phase connue et gérable.

Par ailleurs, même si la description qui précède présente la présente invention dans le cadre d'un système d'imagerie comprenant :

- une sonde 4 d'acquisition de données,
- une unité de calcul externe 5 pour la reconstruction d'images à partir des données transmises par la sonde,
- une unité d'affichage 6 pour l'affichage des images reconstruites,

il est bien évident pour l'homme du métier que l'invention peut être utilisée avec d'autres types de systèmes d'imagerie, tels que des systèmes d'imagerie dans lesquels l'unité de calcul est intégrée dans la sonde. Dans ce cas, les étapes de prétraitement décrites précédemment permettent de limiter la puissance consommée (par la sonde) pour la reconstruction d'images.

## Revendications

1. Procédé de traitement de signaux acoustiques ou électromagnétiques enregistrés par un récepteur, lesdits signaux acoustiques ou électromagnétiques étant représentatifs d'ondes acoustiques ou électromagnétiques réfléchies par un milieu à étudier après réflexion sur ledit milieu, d'ondes acoustiques ou électromagnétiques émises par un émetteur pour illuminer le milieu à étudier, **caractérisé en ce que** le procédé comprend les étapes suivantes :

> - l'émission successive par l'émetteur, de première et deuxième ondes en réponse à l'application successive sur l'émetteur, de premier et deuxième signaux électriques d'excitation dans des première et deuxième bandes de fréquences distinctes contenues dans une plage de fréquences d'excitation de l'émetteur, la bande de fréquence de chacun des premier et deuxième signaux électriques d'excitation, telle que mesurée sur la base d'une largeur de bande à -6dB, étant inférieure au quart de la plage de fréquences de l'émetteur,
> - la réception par le récepteur, de premier et deuxième échos acoustiques ou électromagnétiques respectifs dus aux réflexions respectives des première et deuxième ondes à l'interface d'un objet cible contenu dans le milieu à étudier, et la conversion des premier et deuxième échos acoustiques ou électromagnétiques en premier et deuxième signaux électriques de réception respectifs,
> - prétraitement des premier et deuxième signaux électriques de réception pour obtenir des signaux prétraités, le prétraitement consistant en :

>> o une numérisation (100) des premier et deuxième signaux électriques de réception pour obtenir des premier et deuxième signaux numériques,
>> o au moins un mixage (200) des premier et deuxième signaux numériques pour obtenir des premier et deuxième signaux mixés, la fréquence de mixage du premier signal numérique étant différente de la fréquence de mixage du deuxième signal numérique,
>> o au moins un filtrage passe-bas (300) des premier et deuxième signaux mixés pour obtenir des premier et deuxième signaux filtrés, la fréquence de coupure du filtrage passe-bas, telle que mesurée sur la base d'une largeur de bande à -6dB, étant inférieure au huitième de la plage de fréquences de l'émetteur,
>> o au moins une décimation (400) des premier et deuxième signaux filtrés pour obtenir des premier et deuxième signaux décimés **caractérisés par** un débit d'échantillons complexes démodulés et décimés inférieur à la moitié de la plage de fréquences de l'émetteur.

2. Procédé selon la revendication 1, *dans lequel* pour l'étape de démodulation des premier et deuxième signaux numériques :

> - chaque fréquence de mixage du premier signal numérique est choisie égale à :

>> o la fréquence centrale de la première bande de fréquences, ou à
  ◦ une harmonique de la première bande de fréquence, ou à
  ◦ une sous-harmonique de la première bande de fréquence,

- chaque fréquence de mixage du deuxième signal numérique est choisie égale à :

  ◦ la fréquence centrale de la deuxième bande de fréquences, ou à
  ◦ une harmonique de la deuxième bande de fréquence, ou à
  ◦ une sous-harmonique de la deuxième bande de fréquence.

3. Procédé selon l'une quelconque des revendications 1 ou 2, *dans lequel* les premier et deuxième signaux électriques d'excitation consistent chacun en un signal électrique de type apodisé temporellement.

4. Procédé selon l'une quelconque des revendications 1 à 3, *dans lequel* l'émetteur est adapté pour émettre des ondes selon des directions de propagation différentes, l'étape d'émission successive des première et deuxième ondes comportant les sous-étapes consistant à :

  - émettre la première onde uniquement selon une première direction, et
  - émettre la deuxième onde uniquement selon une deuxième direction différente de la première direction.

5. Procédé selon l'une quelconque des revendications 1 à 4, *dans lequel* l'émetteur inclut un jeu de transducteurs s'étendant linéairement, l'étape d'émission des première et deuxième ondes comportant les sous-étapes consistant à :

  - émettre la première onde à partir d'un premier groupe de transducteurs du jeu de transducteurs,
  - émettre la deuxième onde à partir d'un deuxième groupe de transducteurs du jeu de transducteurs, le deuxième groupe de transducteurs étant différent du premier groupe de transducteurs.

6. Procédé selon l'une quelconque des revendications 1 à 5, *lequel* comprend en outre une étape de transmission par le récepteur, des signaux prétraités vers un dispositif de traitement distant.

7. Procédé selon l'une quelconque des revendications 1 à 6, *dans lequel* :

  - l'étape d'émission comprend l'émission de N ondes en réponse à l'application successive de N signaux électriques d'excitation dans N bandes de fréquences distinctes contenues dans la plage de fréquences de l'émetteur, N étant un entier supérieur ou égal à 3,
- l'étape de réception comprend la réception de N échos acoustiques ou électromagnétiques et leur conversion en N signaux électriques de réception respectifs,
- l'étape de prétraitement comprend :

  ◦ la numérisation des N signaux électriques de réception pour obtenir N signaux numériques,
  ◦ le mixage de chaque signal numérique pour obtenir un signal mixé, la fréquence de mixage de chaque signal numérique étant égale à la fréquence centrale, à une harmonique ou à une sous-harmonique de la bande de fréquences de son signal d'excitation associé,
  ◦ le filtrage passe-bas de chaque signal mixé pour obtenir un signal filtré,
  ◦ la décimation de chaque signal filtré pour obtenir un signal décimé,

le procédé comprenant en outre une étape de traitement pour obtenir une image du milieu à étudier, ladite étape de traitement incluant :
- une sous-étape de formation d'une image élémentaire à partir de chaque signal décimé, ladite étape de formation d'une image élémentaire incluant le calcul de points s'étendant sur une surface 2D ou un volume 3D en utilisant les informations contenues dans le signal décimé,
- une sous-étape de transmodulation consistant à rapporter chaque image élémentaire formée à une fréquence de référence commune, et
- une sous-étape de sommation des images élémentaires transmodulées pour obtenir une image finale du milieu à étudier.

8. Système de traitement comprenant un émetteur et un récepteur, ledit système étant configuré pour le traitement de signaux acoustiques ou électromagnétiques enregistrés par le récepteur, lesdits signaux acoustiques ou électromagnétiques étant représentatifs d'ondes acoustiques ou électromagnétiques réfléchies par un milieu à étudier après réflexion sur ledit milieu d'ondes acoustiques ou électromagnétiques émises par l'émetteur pour illuminer le milieu à étudier, *caractérisé en ce que* le système comprend :

  - un contrôleur pour commander :

    ◦ l'émission successive de première et deuxième ondes en réponse à l'application successive sur l'émetteur, de premier et deuxième signaux électriques d'excitation dans des première et deuxième bandes de fréquences distinctes contenues dans une plage de fréquences d'excitation de l'émetteur, la bande de fréquence de chacun des premier et deuxième signaux électriques d'excitation, telle que mesurée sur la base d'une largeur de bande à -6dB, étant inférieure au quart de la plage de fréquences de l'émetteur,

◦ la réception par le récepteur, de premier et deuxième échos acoustiques ou électromagnétiques respectifs dus aux réflexions respectives des première et deuxième ondes à l'interface d'un objet cible contenu dans le milieu à étudier, et la conversion des premier et deuxième échos acoustiques ou électromagnétiques en premier et deuxième signaux électriques de réception respectifs,

- une unité d'acquisition pour le prétraitement des premier et deuxième signaux électriques de réception afin d'obtenir des signaux prétraités, le prétraitement consistant en :

◦ la numérisation des premier et deuxième signaux électriques de réception pour obtenir des premier et deuxième signaux numériques,

◦ le mixage des premier et deuxième signaux numériques pour obtenir des premier et deuxième signaux mixés, la fréquence de mixage du premier signal numérique étant différente de la fréquence de mixage du deuxième signal numérique,

◦ le filtrage passe-bas des premier et deuxième signaux mixés pour obtenir des premier et deuxième signaux filtrés, la fréquence de coupure du filtrage passe-bas, telle que mesurée sur la base d'une largeur de bande à -6dB, étant inférieure au huitième de la plage de fréquences de l'émetteur,

◦ la décimation des premier et deuxième signaux filtrés pour obtenir des premier et deuxième signaux décimés **caractérisés par** un débit d'échantillons complexes démodulés et décimés inférieur à la moitié de la plage de fréquences de l'émetteur.

9. Produit programme d'ordinateur comprenant des instructions de code de programmation qui conduisent le système selon la revendication 8 à exécuter les étapes du procédé selon l'une quelconque des revendications 1 à 7.

**Patentansprüche**

1. Verfahren zur Verarbeitung von akustischen oder elektromagnetischen Signalen, die von einem Empfänger aufgezeichnet werden, wobei die akustischen oder elektromagnetischen Signale für akustische oder elektromagnetische Wellen repräsentativ sind, die von einem zu untersuchenden Medium nach Reflexion von akustischen oder elektromagnetischen Wellen an diesem Medium reflektiert werden, die von einem Sender gesendet werden, um das zu untersuchende Medium zu beleuchten, **dadurch gekennzeichnet, dass** das Verfahren die folgenden Schritte umfasst:

- das aufeinanderfolgende Senden einer ersten und einer zweiten Welle durch den Sender als Reaktion auf das aufeinanderfolgende Anwenden eines ersten und eines zweiten elektrischen Erregungssignals auf den Sender in einem unterschiedlichen ersten und zweiten Frequenzband, die in einem Erregungsfrequenzbereich des Senders enthalten sind, wobei das Frequenzband von jedem des ersten und des zweiten elektrischen Erregungssignals, gemessen auf der Basis einer Bandbreite bei - 6dB, weniger als ein Viertel des Frequenzbereichs des Senders beträgt,
- das Empfangen eines jeweiligen ersten und zweiten akustischen oder elektromagnetischen Echos durch den Empfänger aufgrund der jeweiligen Reflexionen der ersten und der zweiten Welle an der Grenzfläche eines Zielobjekts, das in dem zu untersuchenden Medium enthalten ist, und das Umwandeln des ersten und des zweiten akustischen oder elektromagnetischen Echos in ein jeweiliges erstes und zweites elektrisches Empfangssignal,
- Vorverarbeiten des ersten und des zweiten elektrischen Empfangssignals, um vorverarbeitete Signale zu erhalten, wobei die Vorverarbeitung besteht aus:

◦ einer Digitalisierung (100) des ersten und des zweiten elektrischen Empfangssignals, um ein erstes und zweites digitales Signal zu erhalten,
◦ mindestens einer Mischung (200) des ersten und des zweiten digitalen Signals, um ein erstes und zweites gemischtes Signal zu erhalten, wobei die Mischfrequenz des ersten digitalen Signals von der Mischfrequenz des zweiten digitalen Signals verschieden ist,
◦ mindestens einer Tiefpassfilterung (300) des ersten und des zweiten gemischten Signals, um ein erstes und zweites gefiltertes Signal zu erhalten, wobei die Grenzfrequenz der Tiefpassfilterung, gemessen auf der Basis einer Bandbreite bei -6dB, kleiner als ein Achtel des Frequenzbereichs des Senders ist,
◦ mindestens eine Dezimierung (400) des ersten und des zweiten gefilterten Signals, um ein erstes und zweites dezimiertes Signal zu erhalten, die durch einen Durchsatz komplexer demodulierter und dezimierter Muster gekennzeichnet sind, der kleiner als die Hälfte des Frequenzbereichs des Senders ist.

2. Verfahren nach Anspruch 1, wobei für den Schritt der Demodulation des ersten und des zweiten digitalen Signals:

    - jede Mischfrequenz des ersten digitalen Signals ausgewählt ist als gleich:

        ◦ der Mittenfrequenz des ersten Frequenzbandes, oder
        ◦ einer Harmonischen des ersten Frequenzbandes, oder
        ◦ einer Subharmonischen des ersten Frequenzbandes,

    - jede Mischfrequenz des zweiten digitalen Signals ausgewählt ist als gleich:

        ◦ oder Mittenfrequenz des zweiten Frequenzbandes, oder
        ◦ einer Harmonischen des zweiten Frequenzbandes, oder
        ◦ einer Subharmonischen des zweiten Frequenzbandes.

3. Verfahren nach einem der Ansprüche 1 oder 2, wobei das erste und das zweite elektrische Erregungssignal jeweils aus einem elektrischen Signal vom zeitlich apodisierten Typ bestehen.

4. Verfahren nach einem der Ansprüche 1 bis 3, wobei der Sender geeignet ist, Wellen in verschiedenen Ausbreitungsrichtungen zu senden, wobei der Schritt des aufeinanderfolgenden Sendens der ersten und der zweiten Welle die folgenden Unterschritte umfasst:

    - Senden der ersten Welle nur in einer ersten Richtung, und
    - Senden der zweiten Welle nur in einer zweiten Richtung, die von der ersten Richtung verschieden ist.

5. Verfahren nach einem der Ansprüche 1 bis 4, wobei der Sender einen Satz sich linear erstreckender Wandler einschließt, wobei der Schritt des Sendens der ersten und der zweiten Welle die folgenden Unterschritte umfasst:

    - Senden der ersten Welle von einer ersten Gruppe von Wandlern des Wandlersatzes,
    - Senden der zweiten Welle von einer zweiten Gruppe von Wandlern des Wandlersatzes, wobei die zweite Wandlergruppe von der ersten Wandlergruppe verschieden ist.

6. Verfahren nach einem der Ansprüche 1 bis 5, das ferner einen Schritt des Übertragens der vorverarbeiteten Signale an eine entfernte Verarbeitungsvorrichtung durch den Empfänger umfasst.

7. Verfahren nach einem der Ansprüche 1 bis 6, wobei:

    - der Sendeschritt das Senden von N Wellen als Reaktion auf das aufeinanderfolgende Anwenden von N elektrischen Erregungssignalen in N unterschiedlichen Frequenzbändern umfasst, die im Frequenzbereich des Senders enthalten sind, wobei N eine ganze Zahl größer oder gleich 3 ist,
    - der Empfangsschritt das Empfangen von N akustischen oder elektromagnetischen Echos und deren Umwandlung in N jeweilige elektrische Empfangssignale umfasst,
    - der Vorverarbeitungsschritt umfasst:

        ◦ die Digitalisierung der N elektrischen Empfangssignale, um N digitale Signale zu erhalten,
        ◦ das Mischen jedes digitalen Signals, um ein gemischtes Signal zu erhalten, wobei die Mischfrequenz jedes digitalen Signals gleich der Mittenfrequenz, einer Harmonischen oder einer Subharmonischen des Frequenzbandes seines zugehörigen Erregungssignals ist,
        ◦ die Tiefpassfilterung jedes gemischten Signals, um ein gefiltertes Signal zu erhalten,
        ◦ die Dezimierung jedes gefilterten Signals, um ein dezimiertes Signal zu erhalten,

    wobei das Verfahren ferner einen Verarbeitungsschritt umfasst, um ein Bild des zu untersuchenden Mediums zu erhalten, wobei der Verarbeitungsschritt einschließt:
    - einen Unterschritt des Bildens eines Elementarbildes aus jedem dezimierten Signal, wobei der Schritt des Bildens eines Elementarbildes das Berechnen von Punkten beinhaltet, die sich über eine 2D-Oberfläche oder ein 3D-Volumen erstrecken, unter Verwendung der in dem dezimierten Signal enthaltenen Informationen,
    - einen Transmodulations-Unterschritt, der darin besteht, jedes gebildete Elementarbild einer gemeinsamen Referenzfrequenz zuzuordnen, und

- einen Summierungs-Unterschritt der transmodulierten Elementarbilder, um ein endgültiges Bild des zu untersuchenden Mediums zu erhalten.

8. Verarbeitungssystem, umfassend einen Sender und einen Empfänger, wobei das System zur Verarbeitung von akustischen oder elektromagnetischen Signalen ausgelegt ist, die von dem Empfänger aufgezeichnet werden, wobei die akustischen oder elektromagnetischen Signale für akustische oder elektromagnetische Wellen repräsentativ sind, die von einem zu untersuchenden Medium nach Reflexion von akustischen oder elektromagnetischen Wellen an diesem Medium reflektiert werden, die von einem Sender gesendet werden, um das zu untersuchende Medium zu beleuchten, **dadurch gekennzeichnet, dass** das System umfasst:

- einen Controller zum Steuern:

  ◦ des aufeinanderfolgenden Sendens einer ersten und einer zweiten Welle als Reaktion auf das aufeinanderfolgende Anwenden eines ersten und eines zweiten elektrischen Erregungssignals auf den Sender einem unterschiedlichen ersten und zweiten Frequenzband, die in einem Erregungsfrequenzbereich des Senders enthalten sind, wobei das Frequenzband von jedem des ersten und des zweiten elektrischen Erregungssignals, gemessen auf der Basis einer Bandbreite bei -6dB, weniger als ein Viertel des Frequenzbereichs des Senders beträgt,
  ◦ des Empfangens eines jeweiligen ersten und zweiten akustischen oder elektromagnetischen Echos durch den Empfänger aufgrund der jeweiligen Reflexionen der ersten und der zweiten Welle an der Grenzfläche eines Zielobjekts, das in dem zu untersuchenden Medium enthalten ist, und des Umwandelns des ersten und des zweiten akustischen oder elektromagnetischen Echos in ein jeweiliges erstes und zweites elektrisches Empfangssignal,

- eine Erfassungseinheit zur Vorverarbeitung des ersten und des zweiten elektrischen Empfangssignals, um vorverarbeitete Signale zu erhalten, wobei die Vorverarbeitung besteht aus:

  ◦ der Digitalisierung des ersten und des zweiten elektrischen Empfangssignals, um ein erstes und zweites digitales Signal zu erhalten,

  ◦ dem Mischen des ersten und des zweiten digitalen Signals, um ein erstes und zweites gemischtes Signal zu erhalten, wobei die Mischfrequenz des ersten digitalen Signals von der Mischfrequenz des zweiten digitalen Signals verschieden ist,
  ◦ der Tiefpassfilterung des ersten und des zweiten gemischten Signals, um ein erstes und zweites gefiltertes Signal zu erhalten, wobei die Grenzfrequenz der Tiefpassfilterung, gemessen auf der Basis einer Bandbreite bei -6dB, kleiner als ein Achtel des Frequenzbereichs des Senders ist,
  ◦ der Dezimierung des ersten und des zweiten gefilterten Signals, um ein erstes und zweites dezimiertes Signal zu erhalten, das durch einen Durchsatz komplexer demodulierter und dezimierter Muster gekennzeichnet ist, der kleiner als die Hälfte des Frequenzbereichs des Senders ist.

9. Rechnerprogrammprodukt, umfassend Programmiercodeanweisungen, die das System nach Anspruch 8 veranlassen, die Schritte des Verfahrens nach einem der Ansprüche 1 bis 7 auszuführen.

**Claims**

1. A method of processing acoustic or electromagnetic signals recorded by a receiver, said acoustic or electromagnetic signals being representative of acoustic or electromagnetic waves reflected by a medium to be studied after reflection off said medium of acoustic or electromagnetic waves transmitted by a transmitter to illuminate the medium to be studied, **characterised in that** the method comprises the following steps:

- the successive transmission, by the transmitter, of first and second waves in response to the successive application to the transmitter of first and second electrical excitation signals in first and second separate frequency bands contained in a range of excitation frequencies of the transmitter, the frequency band of each of the first and second electrical excitation signals, as measured based on a bandwidth at -6 dB, being less than a quarter of the frequency range of the transmitter,
- the reception, by the receiver, of respective first and second acoustic or electromagnetic echoes due to the respective reflections of the first and second waves at the interface of a target object contained in the medium to be studied, and the conversion of the first and second acoustic or electromagnetic echoes into respective first and second electrical reception signals,

- the pre-processing of the first and second electrical reception signals to obtain pre-processed signals, the pre-processing consisting in:

> o a digitization (100) of the first and second electrical reception signals to obtain first and second digital signals,
> o at least one mixing (200) of the first and second digital signals to obtain first and second mixed signals, the mixing frequency of the first digital signal being different from the mixing frequency of the second digital signal,
> o at least one low-pass filtering (300) of the first and second mixed signals to obtain first and second filtered signals, the cut-off frequency of the low-pass filter, as measured based on a bandwidth at -6 dB, being less than an eighth of the frequency range of the transmitter,
> o at least one decimation (400) of the first and second filtered signals to obtain first and second decimated signals **characterized by** a flow rate of demodulated and decimated complex samples less than half the frequency range of the transmitter.

2. The method according to claim 1, wherein for the step of demodulation of the first and second digital signals:

> - each mixing frequency of the first digital signal is chosen equal to:
>
>> o the center frequency of the first frequency band, or to
>> o a harmonic of the first frequency band, or to
>> o a sub-harmonic of the first frequency band,
>
> - each mixing frequency of the second digital signal is chosen equal to:
>
>> o the center frequency of the second frequency band, or to
>> o a harmonic of the second frequency band, or to
>> o a sub-harmonic of the second frequency band.

3. The method according to any one of claims 1 or 2, wherein the first and second electrical excitation signals each consist in an electrical signal of temporally apodized type.

4. The method according to any one of claims 1 to 3, wherein the transmitter is adapted to transmit waves along different propagation directions, the step of successive transmission of the first and second waves including sub-steps consisting in:

> - transmitting the first wave only along a first direction, and
> - transmitting the second wave only along a second direction different from the first direction.

5. The method according to any one of claims 1 to 4, wherein the transmitter includes a set of transducers extending linearly, the step of transmission of the first and second waves including the sub-steps consisting in:

> - transmitting the first wave from a first group of transducers of the set of transducers,
> - transmitting the second wave from a second group of transducers of the set of transducers, the second group of transducers being different from the first group of transducers.

6. The method according to any one of claims 1 to 5, which further comprises a step of transmission, by the receiver, of the pre-processed signals toward a remote processing device.

7. The method according to any one of claims 1 to 6, wherein:

> - the transmission step comprises the transmission of N waves in response to the successive application of N electrical excitation signals in N separate frequency bands contained in the frequency range of the transmitter, N being an integer greater than or equal to 3,
> - the reception step comprises the receiving of N acoustic or electromagnetic echoes and their conversion into N respective electrical reception signals,
> - the pre-processing step comprises:
>
>> o the digitization of the electrical reception N signals to obtain N digital signals,
>> o the mixing of each digital signal to obtain a mixed signal, the mixing frequency of each digital signal being equal to the center frequency, to a harmonic or to a subharmonic of the frequency band of its associated excitation signal,
>> o the low-pass filtering of each mixed signal to obtain a filtered signal,
>> o the decimation of each filtered signal to obtain a decimated signal,

the method further comprising a step of processing to obtain an image of the medium to be studied, said processing step including:

- a sub-step of formation of an elementary image based on each decimated signal, said step of formation of an elementary image including the computation of points extending over a 2D surface or a 3D volume using the information contained in the decimated signal,
- a sub-step of cross-modulation consisting in reporting each elementary image formed to a common reference frequency, and
- a sub-step of summation of the cross-modulated elementary images to obtain a final image of the medium to be studied.

8. A processing system comprising a transmitter and a receiver, said system being configured for processing acoustic or electromagnetic signals recorded by the receiver, said acoustic or electromagnetic signals being representative of acoustic or electromagnetic waves reflected by a medium to be studied after reflection off said medium of acoustic or electromagnetic waves transmitted by a transmitter to illuminate the medium to be studied, **characterised in that** the system comprises:

- a controller to control:

o the successive transmission of first and second waves in response to the successive application to the transmitter of first and second electrical excitation signals in first and second separate frequency bands contained in a range of excitation frequencies of the transmitter, the frequency band of each of the first and second electrical excitation signals, as measured based on a bandwidth at -6 dB, being less than a quarter of the frequency range of the transmitter,
o the reception, by the receiver, of respective first and second acoustic or electromagnetic echoes due to the respective reflections of the first and second waves at the interface of a target object contained in the medium to be studied, and the conversion of the first and second acoustic or electromagnetic echoes into respective first and second electrical reception signals,

- an acquiring unit for pre-processing the first and second electrical reception signals in order to obtain pre-processed signals, the pre-processing consisting in:

o the digitization of the first and second electrical reception signals to obtain first and second digital signals,
o the mixing of the first and second digital signals to obtain first and second mixed signals, the mixing frequency of the first digital signal being different from the mixing frequency of the second digital signal,
o the low-pass filtering of the first and second mixed signals to obtain first and second filtered signals, the cut-off frequency of the low-pass filter, as measured based on a bandwidth at -6 dB, being less than an eighth of the frequency range of the transmitter,
o the decimation of the first and second filtered signals to obtain first and second decimated signals **characterized by** a flow rate of complex demodulated and decimated samples less than half of the frequency range of the transmitter.

9. A computer program product comprising programming code instructions which cause the system according to claim 8 to execute the steps of the method according to any one of claims 1 to 7.

**FIG.1**

**FIG.2**

**FIG.3**

52

5

51

4

CPU

6

**FIG.4**

**FIG.5**

**FIG.6**

**FIG.7**

**FIG.8**

**FIG.9**

300

**FIG.10**

**FIG.11**

**FIG.12**

FIG.13

**FIG.14**

**FIG.15**

```
        ┌─────────────────────────┐
        │        EMISSION         │
        └─────────────────────────┘
                     │
                     ▼
        ┌─────────────────────────┐  ～  100
        │      NUMERISATION       │
        └─────────────────────────┘
                     │
                     ▼
        ┌─────────────────────────┐  ～  200
        │        MIXAGE           │
        └─────────────────────────┘
                     │
                     ▼
        ┌─────────────────────────┐  ～  300
        │       FILTRAGE          │
        └─────────────────────────┘
                     │
                     ▼
        ┌─────────────────────────┐  ～  400
        │      DECIMATION         │
        └─────────────────────────┘
```

**FIG.16**

**RÉFÉRENCES CITÉES DANS LA DESCRIPTION**

**Documents brevets cités dans la description**

- US 5891038 A
- WO 2010004333 A
- US 2008110261 A